(19) **Europäisches Patentamt / European Patent Office / Office européen des brevets**

(11) **EP 4 495 837 A1**

(12) # EUROPEAN PATENT APPLICATION

(43) Date of publication:
**22.01.2025 Bulletin 2025/04**

(21) Application number: **24160262.2**

(22) Date of filing: **28.02.2024**

(51) International Patent Classification (IPC):
**G06N 5/01** *(2023.01)* **G06N 7/01** *(2023.01)*
**G06F 7/544** *(2006.01)*

(52) Cooperative Patent Classification (CPC):
**G06N 5/01; G06F 7/544; G06N 7/01**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.07.2023 JP 2023116823**

(71) Applicant: **Kabushiki Kaisha Toshiba**
**Tokyo 105-0023 (JP)**

(72) Inventors:
- **HIDAKA, Ryo**
  **Tokyo (JP)**
- **TATSUMURA, Kosuke**
  **Tokyo (JP)**
- **YAMASAKI, Masaya**
  **Tokyo (JP)**
- **NAKAYAMA, Jun**
  **Tokyo, 105-0023 (JP)**

(74) Representative: **Marks & Clerk LLP**
**15 Fetter Lane**
**London EC4A 1BW (GB)**

(54) **INFORMATION PROCESSING DEVICE, INFORMATION PROCESSING METHOD, COMPUTER PROGRAM, AND CIRCUIT INFORMATION**

(57) An information processing device (20) according to an embodiment includes a solver device (40) and an information processing circuit (301). The circuit (301) acquires data and generates a combination optimization problem based on the data. The circuit (301) causes the solver device (40) to solve the combination optimization problem. A first partial weight group being part of weight values is the same as a second partial weight group being other part of the weight values. The circuit (301) writes the first partial weight group and the second partial weight group in a common region in a first memory (50), and gives, to the solver device (40), first information indicating a storage position of each of the weight values in the first memory (50). The solver device (40) reads weight values from the first memory (50) on the basis of the first information and obtains the solution.

FIG.7

EP 4 495 837 A1

**Description**

FIELD

Embodiments described herein relate generally to an information processing device, an information processing method, a computer program, and circuit information.

BACKGROUND

Optimization of systems in various fields of application, such as control, finance, communication, logistics, and chemistry, is often mathematically reduced to combination optimization problems. An information processing system that implements various information processing functions such as recognition, determination, and planning by solving a combination optimization problem and enhances efficiency of such functions has been proposed.

The combination optimization problem is to define a cost function using a plurality of decision variables (for example, discrete variables) representing a state of a system to be optimized as arguments and solve a combination of values of a plurality of decision variables that minimizes the defined cost function. The state of the system expressed by the plurality of decision variables is referred to as a solution. In the combination optimization problem, as the number of decision variables increases, the number of states that can be taken as a solution increases exponentially. An increase in the number of states that can be taken as a solution is referred to as a combination explosion. The combinational optimization of selecting one optimum solution from all solution candidates is known as a problem that is difficult to calculate. Performing large-scale combinatorial optimization in a short time is still a challenge.

In recent years, a specific purpose device called an Ising machine that searches a ground state of an Ising spin model has attracted attention. A problem of searching the ground state of the Ising spin model is called an Ising problem. The Ising problem is a combination optimization problem that minimizes a cost function given by a quadratic function of an Ising spin that is one of binary variables. In the Ising problem, the cost function is referred to as Ising energy. Many practical combination optimization problems can be converted into Ising problems. The Ising machine can solve the Ising problem at high speed. Therefore, many practical combination optimization problems can be solved at high speed using an Ising machine.

In a case where the situation changes from moment to moment, a new combination optimization problem may be generated and solved according to the change in the situation, and processing may be performed based on the obtained solution. For example, in a case where the combination optimization problem is applied to a transaction device that electronically trades stocks in a financial transaction market, a new combination optimization problem is generated according to a price change of stocks, and a transaction is performed based on the obtained solution. Moreover, in a case where the combination optimization problem is applied to a control system that controls a moving object based on an image obtained by capturing a surrounding scene, a new combination optimization problem is generated according to a change in the image, and the moving object is controlled based on the obtained solution.

In such a system, every time the situation changes, a combination optimization problem is generated, and the generated combination optimization problem is given to the solver device. For example, in a case where the combination optimization problem is an N-sized Ising problem, N×N quadratic coefficients and N linear coefficients is required to be generated and given to the solver device. Therefore, in such a system, in order to improve the responsiveness from the change in the situation to the time until the processing is performed based on the solution, it is preferable that the combination optimization problem can be generated at high speed and given to the solver device.

BRIEF DESCRIPTION OF THE DRAWINGS

FIG. 1 is a diagram illustrating a model of an Ising problem;
FIG. 2 is a diagram illustrating internal variables used by a simulated bifurcation algorithm;
FIG. 3 is a flowchart illustrating a procedure of a process of a simulated bifurcation machine;
FIG. 4 is a diagram illustrating a configuration of an information processing system including an Ising machine;
FIG. 5 is a diagram illustrating a configuration of an information processing system including a simulated bifurcation machine;
FIG. 6 is a configuration diagram of a market system;
FIG. 7 is a configuration diagram of an information processing device according to the first embodiment;
FIG. 8 is a diagram illustrating processing timing of the information processing device;
FIG. 9 is a diagram illustrating a pseudo code for generating a Q matrix;
FIG. 10 is a diagram illustrating an example of a plurality of weight values;

FIG. 11 is a diagram illustrating M partial regions, K patterns, and pattern information;

FIG. 12 is a configuration diagram of a solver device according to the second embodiment;

FIG. 13 is a configuration diagram of a solver device according to the third embodiment;

FIG. 14 is a configuration diagram of an arithmetic circuit;

FIG. 15 is a configuration diagram of an action arithmetic circuit;

FIG. 16 is a diagram illustrating a matrix (J);

FIG. 17 is a configuration diagram of a matrix arithmetic circuit according to the third embodiment;

FIG. 18 is a configuration diagram of a matrix arithmetic circuit according to the fourth embodiment;

FIG. 19 is a diagram illustrating an example of a configuration of a control system; and

FIG. 20 is a hardware configuration diagram of the information processing device.

DETAILED DESCRIPTION

An information processing device according to an embodiment executes processing on data. The information processing device includes a solver device and an information processing circuit. The solver device is configured to solve a combination optimization problem. The information processing circuit connected to the solver device. The information processing circuit is configured to acquire the data, and generate the combination optimization problem based on the data and cause the solver device to solve the combination optimization problem. A cost function in the combination optimization problem includes a plurality of decision variables and a plurality of weight values. A term included in the cost function is represented by multiplication of one or more decision variables of the plurality of decision variables and a weight value of the plurality of weight values. A first partial weight group being part of the plurality of weight values is the same as a second partial weight group being other part of the plurality of weight values. The solver device includes a first memory to store the plurality of weight values. The information processing circuit is configured to, in generating the combination optimization problem, generate the plurality of weight values based on the data and write the plurality of weight values to the first memory. The information processing circuit is configured to, in writing the plurality of weight values, write the first partial weight group and the second partial weight group in a common region in the first memory and give, to the solver device, first information indicating a storage position of each of the weight values in the first memory. The solver device is configured to read the plurality of weight values from the first memory on the basis of the first information and obtain a solution.

Premise

Terms and techniques that are the premise of the description of the embodiments will be described.

The combination optimization problem is to define a cost function using a plurality of decision variables (for example, discrete variables) representing a state of a system to be optimized as arguments and solve a combination of values of a plurality of decision variables that minimizes the defined cost function.

The cost function includes a plurality of decision variables representing the state of the system as arguments, and is a linear or higher function of the decision variables.

For example, the cost function is represented by a linear function or a quadratic function of a plurality of decision variables. The cost function may be a cubic or higher function of the plurality of decision variables. In other words, the cost function is a function of summing a plurality of terms.

Each of the terms is a function that multiplies one or more and a predetermined number or less of the plurality of decision variables by a coefficient. The coefficient in each of the terms is a real number and is also referred to as a weight value. Each of the terms constituting the cost function is represented by multiplication of one or more decision variables among the plurality of decision variables and any one weight value among the plurality of weight values.

The state of the system expressed by the plurality of decision variables is referred to as a solution. A whole set of a plurality of solutions that is allowed to be taken by a state of a system is referred to as a solution space. A solution that gives the minimum value of the cost function is referred to as an exact solution. A solution that gives a value close to the minimum value of the cost function is referred to as a good solution.

The exact solution is to obtain an exact solution that gives a minimum value of a cost function of a combination optimization problem, and to ensure that the solution is an exact solution.

The heuristic solution is to find an exact solution that gives the minimum value of the cost function or a good solution that gives a value close to the minimum value of the cost function of a combination optimization problem. A heuristic solution is also referred to as a heuristic solution. The heuristic solution has no guarantee of an index representing the accuracy of the solution, namely, how close the heuristic solution gives a value to the minimum value of the cost function. The heuristic solution method can output a solution with practically significant accuracy in a shorter solving time than the exact solution method.

The calculation amount of the solution to the combination optimization problem is the amount of operation required to obtain a solution, for example, the number of times of product-sum operation or the like. The solving time required to obtain a solution to the combination optimization problem depends not only on the amount of calculation but also on the configuration of the computer machine that processes the calculation. For example, the higher the computational parallelism and the operating frequency of the computer machine, the shorter the solving time.

The quadratic unconstrained binary optimization (QUBO) problem is an unconstrained quadratic optimization problem in which the decision variable is binary. In the QUBO problem, each of terms included in the cost function is represented by a quadratic expression or a linear expression of the decision variable. The QUBO problem in a narrow definition is a binary variable with a decision variable of zero or one. In the embodiment, the QUBO problem represents a problem of definition in a narrow sense in which the decision variable is zero or one. In the narrow-sense definition QUBO problem, the decision variable may also be referred to as a bit variable.

The cost function of the QUBO problem is expressed by $H_{total\_QUBO}$ of Expression (1).

$$H_{total\_QUBO} = \sum_{i=1}^{N}\sum_{j=1}^{N} Q_{ij}b_ib_j = 2\sum_{i=1}^{N}\sum_{i<j}^{N} Q_{ij}b_ib_j + \sum_{i=1}^{N} Q_{ii}b_i \quad \cdots (1)$$

N is an integer of two or more and represents the number of decision variables. i and j represent an optional integer of one or more and N or less. $b_i$ is zero or one, and represents the i-th decision variable among the N decision variables. $b_j$ is zero or one, and represents the j-th decision variable among the N decision variables. $Q_{ij}$ represents coefficients of the i-th row and the j-th column included in the coefficient matrix (Q) of N×N. Note that $Q_{ij} = Q_{ji}$. $Q_{ii}$ is a coefficient included in the i-th row and the i-th column of the coefficient matrix (Q), and is a coefficient multiplied by the first-order term of the i-th decision variable. $Q_{ii}$ is referred to as a bias coefficient.

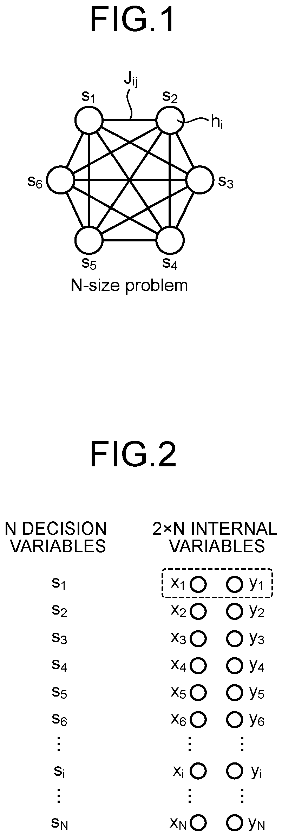

FIG. 1 is a diagram illustrating a model of an Ising problem. The Ising problem is a problem of searching a ground state of an Ising model. The Ising problem is one of the QUBO problems. The decision variable of the Ising problem represents a discrete variable of -1 or +1.

The cost function of the Ising problem is expressed by $H_{total\_Ising}$ of Expression (2).

$$H_{total\_Ising} = -\frac{1}{2}\sum_{i=1}^{N}\sum_{j=1}^{N} J_{ij}s_is_j + \sum_{i=1}^{N} h_is_i \quad \cdots (2)$$

N is an integer of two or more and represents the number of decision variables. i and j represent an optional integer of one or more and N or less. $s_i$ is -1 or +1, and represents the i-th decision variable among the N decision variables. $s_j$ is -1 or +1, and represents the j-th decision variable among the N decision variables. $J_{ij}$ represents coefficients of the i-th row and the j-th column included in the coefficient matrix (J) of N×N. Note that $J_{ij} = J_{ji}$. $h_i$ is a coefficient multiplied by a first-order term of the i-th decision variable. $h_i$ is referred to as a bias coefficient.

The QUBO problem in which the decision variable is $s_i$ corresponds to the problem of the ground state search of the Ising model, which is one of the magnetic body models in the statistical mechanics. Therefore, $s_i$ may also be referred to as a spin variable. Moreover, N, which is the number of decision variables, may also be referred to as the number of spins. In addition, $H_{total\_Ising}$ may also be referred to as Ising energy. The vector represented by the N $s_i$s having the minimum value of $H_{total\_Ising}$ may be referred to as a ground state (ground spin arrangement).

The cost function of the QUBO problem and the cost function of the Ising problem differ only in the value of the constant. Therefore, the QUBO problem and the Ising problem are the same as a combination optimization problem. The QUBO problem and the Ising problem can be mutually converted. For example, the Ising problem and the QUBO problem are mutually converted by Expressions (3-1), (3-2), (3-3), and (3-4).

$$s_i = 2b_i - 1 \quad \cdots (3\text{-}1)$$

$$J_{ij} = -\frac{Q_{ij}}{2}\ (i \neq j) \quad \cdots (3\text{-}2)$$

$$J_{ii} = 0 \quad \cdots (3\text{-}3)$$

$$h_i = \sum_{j=1}^{N} \frac{Q_{ij}}{2} \qquad \cdots (3\text{-}4)$$

The QUBO and Ising problems are known to be NP-complete. Many NP-hard problems can be converted into a QUBO problem or an Ising problem in polynomial time. Therefore, many practical combination optimization problems can be converted into the QUBO problem or the Ising problem.

The Ising machine is a device that solves an Ising problem. Many Ising machines solve Ising problems with heuristic solutions. Ising machines of various principles based on electronics, optics, quantum mechanics, statistical mechanics, and the like have been proposed. Many Ising machines can output an exact solution or a good solution in a short time.

The simulated bifurcation algorithm is an algorithm for solving a combination optimization problem. The simulated bifurcation algorithm is a heuristic solution algorithm.

For example, Hayato Goto, Kosuke Tatsumura and Alexander R. Dixon, "Combinatorial optimization by simulating adiabatic bifurcations in nonlinear Hamiltonian systems," Science Advances 5, eaav2372, 2019 and Hayato Goto, Kotaro Endo, Masaru Suzuki, Yoshisato Sakai, Taro Kanao, Yohei Hamakawa, Ryo Hidaka, Masaya Yamasaki and Kosuke Tatsumura, "High-performance combinatorial optimization based on classical mechanics", Science Advances 7, eabe7953, 2021 and JP 2021-060864 A, JP 2019-145010 A, JP 2019-159566 A, JP 2021-043667 A, and JP 2021-043589A disclose the simulated bifurcation algorithm. The simulated bifurcation algorithm is also referred to as a quantum inspired algorithm because it has been discovered with an idea from a quantum mechanical optimization method based on the quantum adiabatic theorem. The simulated bifurcation algorithm can solve a combination optimization problem in which the cost function is a quadratic function of a plurality of decision variables. The simulated bifurcation algorithm can also solve a combination optimization problem in which the cost function is a cubic or higher function of a plurality of decision variables, namely, a higher order binary optimization (HUBO) problem. For example, a simulated bifurcation algorithm that solves the HUBO problem is disclosed in JP 2021-043667 A. Moreover, the simulated bifurcation algorithm can also solve a combination optimization problem including variables of continuous values in part of all decision variables. A simulated bifurcation algorithm that solves a combination optimization problem including variables of continuous values in part of all decision variables is disclosed in JP 2021-043589A.

The simulated bifurcation machine is a calculation apparatus that executes a process according to the simulated bifurcation algorithm. A simulated bifurcation machine that solves a QUBO problem or an Ising problem is an example of an Ising machine. In the present embodiment, the simulated bifurcation machine solves the Ising problem.

FIG. 2 is a diagram illustrating internal variables used by the simulated bifurcation algorithm.

In a case of solving a combination optimization problem in which a cost function is represented using N decision variables ($s_1$ to $s_N$), the simulated bifurcation algorithm uses N position variables ($x_1$ to $x_N$) and N momentum variables ($y_1$ to $y_N$) as internal variables. The simulated bifurcation algorithm uses $2 \times N$ internal variables.

N position variables ($x_i$) correspond to N decision variables ($s_i$) on a one-to-one basis. The i-th position variable ($x_i$) among the N position variables corresponds to the i-th decision variable ($s_i$) among the N decision variables. N momentum variables ($y_i$) correspond to N decision variables ($s_i$) on a one-to-one basis. The i-th momentum variable ($y_i$) among the N momentum variables corresponds to the i-th decision variable ($s_i$) among the N decision variables.

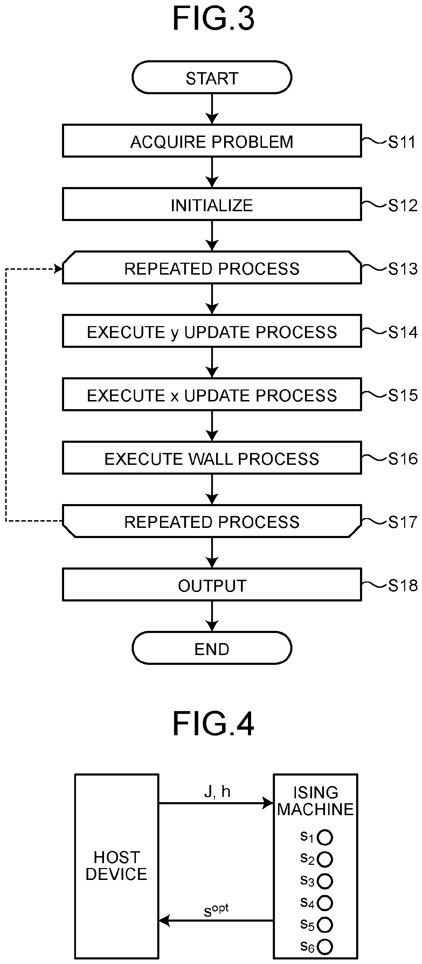

FIG. 3 is a flowchart illustrating a procedure of a process of the simulated bifurcation machine. The simulated bifurcation machine executes a process according to the simulated bifurcation algorithm in the procedure illustrated in FIG. 3.

First, in S11, the simulated bifurcation machine acquires the Ising problem. Specifically, the simulated bifurcation machine acquires J, which is a matrix including $N \times N$ coefficients, and h including N bias coefficients.

Subsequently, in S12, the simulated bifurcation machine initializes $2 \times N$ internal variables, namely, N position variables ($x_1$ to $x_N$) and N momentum variables ($y_1$ to $y_N$). The simulated bifurcation machine may acquire both or one of the initial values of the N position variables ($x_1$ to $x_N$) and the initial values of the N momentum variables ($y_1$ to $y_N$) from the outside. Moreover, the simulated bifurcation machine may generate the initial values of the N position variables ($x_1$ to $x_N$) and the initial values of the N momentum variables ($y_1$ to $y_N$) by a random number generated by a random number generation circuit, or may set the initial values to predetermined values. Note that, since the simulated bifurcation machine is heuristic, even in the same problem, when at least one of the initial values of the N position variables ($x_1$ to $x_N$) and the initial values of the N momentum variables ($y_1$ to $y_N$) is different, a different good solution may be output.

Subsequently, the simulated bifurcation machine repeats the process of S14 to S16 a preset number of times (loop processing between S13 and S17). The process of S14 to S16 is a matrix arithmetic process of matrix-multiplying N position variables ($x_1$ to $x_N$) by a matrix including weight values of N rows $\times$ N columns, and a time evolution process of time-evolving the N position variables ($x_1$ to $x_N$) and the N momentum variables ($y_1$ to $y_N$).

In S14, the simulated bifurcation machine executes a y update process of updating each of the N momentum

variables ($y_1$ to $y_N$). In the update process of the i-th momentum variable ($y_i$) in the y update processing, the simulated bifurcation machine updates the i-th momentum variable ($y_i$) by the N position variables ($x_1$ to $x_N$), the N coefficients ($J_{i,j}$) representing the interaction between the i-th position variable ($x_i$) in the N×N matrices (J) and the other (N-1) position variables ($x_{1\ to\ i-1}$, $x_{i+1\ to\ N}$), and the i-th bias coefficient ($h_i$).

Subsequently, in S15, the simulated bifurcation machine executes an x update process of updating each of the N position variables ($x_1$ to $x_N$). The simulated bifurcation machine updates the i-th position variable ($x_i$) by the i-th momentum variable ($y_i$) in the update process of the i-th position variable ($x_i$) in the x update processing.

Note that the simulated bifurcation machine may execute the process of S14 and the process of S15 in an order changed.

Subsequently, in S16, the simulated bifurcation machine executes a wall process on the position variable whose absolute value exceeds one among the N position variables ($x_1$ to $x_N$). Moreover, the simulated bifurcation machine also executes a wall process on the momentum variable corresponding to the position variable whose absolute value exceeds one. For example, in the wall process, the simulated bifurcation machine changes a value of the position variable whose absolute value exceeds one to a value whose absolute value is one or smaller than one in a state where the signs are the same. Moreover, for example, the simulated bifurcation machine changes a value of the momentum variable corresponding to the position variable whose absolute value exceeds one to zero in the wall processing.

The simulated bifurcation algorithm has variations in operations of the x update processing, the y update processing, and the wall processing. For example, variations of the simulated bifurcation algorithm include an adiabatic simulated bifurcation (aSB) algorithm, a ballistic simulated bifurcation (bSB) algorithm, and a discrete simulated bifurcation (dSB) algorithm.

In a case where the processing according to the adiabatic simulated bifurcation algorithm is executed, the simulated bifurcation machine executes an operation represented by Expression (4-1) in the y update processing (S14) and executes an operation represented by Expression (4-2) in the x update processing (S15). Note that, in a case where the processing according to the adiabatic simulated bifurcation algorithm is executed, the simulated bifurcation machine does not execute the wall process (S15).

$$y_i(t_{k+1}) = y_i(t_k)$$
$$+ \left\{ -Kx_i^3(t_k) - [a_0 - a(t_k)]x_i(t_k) - \eta h_i \right.$$
$$\left. + c_0 \sum_{j=1}^{N} J_{i,j}\, x_j(t_k) \right\} \Delta_t \qquad \cdots (4\text{-}1)$$

$$x_i(t_{k+1}) = x_i(t_k) + a_0 y_i(t_{k+1})\Delta_t \qquad \cdots (4\text{-}2)$$

In a case where the processing according to the ballistic simulated bifurcation algorithm is executed, the simulated bifurcation machine executes an operation represented by Expression (5-1) in the y update processing (S14), executes an operation represented by Expression (5-2) in the x update processing (S15), and executes an operation represented by Expression (5-3) in the wall processing (S16).

$$y_i(t_{k+1}) = y_i(t_k)$$
$$+ \left\{ -[a_0 - a(t_k)]x_i(t_k) - \eta h_i + c_0 \sum_{j=1}^{N} J_{i,j}\, x_j(t_k) \right\} \Delta_t \qquad \cdots (5\text{-}1)$$

$$x_i(t_{k+1}) = x_i(t_k) + a_0 y_i(t_{k+1})\Delta_t \qquad \cdots (5\text{-}2)$$

$$\text{if } |x_i(t_{k+1})| > 1, \text{ set } x_i(t_{k+1}) = \mathrm{sgn}\big(x_i(t_{k+1})\big) \text{ and } y_i(t_{k+1}) = 0 \qquad \cdots (5\text{-}3)$$

In a case where the processing according to the discrete simulated bifurcation algorithm is executed, the simulated bifurcation machine executes an operation represented by Expression (6-1) in the y update processing (S14), executes an operation represented by Expression (6-2) in the x update processing (S15), and executes an operation represented by Expression (6-3) in the wall processing (S16).

$$y_i(t_{k+1}) = y_i(t_k)$$

$$+ \left\{ -[a_0 - a(t_k)]x_i(t_k) - \eta h_i \right.$$  $\cdots (6\text{-}1)$

$$\left. + c_0 \sum_{j=1}^{N} J_{i,j} \mathrm{sgn}[x_i(t_k)] \right\} \Delta_t$$

$$x_i(t_{k+1}) = x_i(t_k) + a_0 y_i(t_{k+1})\Delta_t \qquad \cdots (6\text{-}2)$$

$$\text{if } |x_i(t_{k+1})| > 1, \text{ set } x_i(t_{k+1}) = \mathrm{sgn}(x_i(t_{k+1})) \text{ and } y_i(t_{k+1}) = 0 \quad \cdots (6\text{-}3)$$

In Expressions (4-1), (4-2), (5-1), (5-2), (5-3), (6-1), (6-2), and (6-3), each of $t_k$ and $t_{k+1}$ represent a time. $t_{k+1}$ is a time obtained by adding a unit time ($\Delta t$) to $t_k$.

$x_i(t_k)$ indicates a value of the i-th position variable ($x_i$) at the time ($t_k$). $x_i(t_{k+1})$ indicates a value of the i-th position variable ($x_i$) at the time ($t_{k+1}$). $y_i(t_k)$ indicates a value of the i-th momentum variable ($y_i$) at the time ($t_k$). $y_i(t_{k+1})$ indicates a value of the i-th momentum variable ($y_i$) at the time ($t_{k+1}$).

K, $a_0$, $\eta$, and $c_0$ are predetermined constants. $a(t_k)$ is a function that changes according to a time. $a(t_k)$, where, for example, $a(ti) = 0$, is a positive real number that increases as the time increases, and is a function that is $a_0$ at the end time (T) ($a(T) = a_0$). Moreover, $\mathrm{sgn}(x_i(t_k))$ is a function that outputs the sign of the i-th position variable ($x_i$) at the time ($t_k$), and is +1 when $x_i(t_k)$ is zero or more and -1 when $x_i(t_k)$ is less than zero.

In a case where the process of S14 to S16 are executed a predetermined number of times, namely, in a case where the operation is executed until time t reaches final time T, the simulated bifurcation machine exits the loop processing between S13 and S17 and advances the process to S18.

In S 18, the simulated bifurcation machine outputs N position variables ($x_1$ to $x_N$) at the final time or N decision variables ($s_1$ to $s_N$) calculated based on the N position variables ($x_1$ to $x_N$) at the final time. The simulated bifurcation machine calculates the i-th decision variable ($s_i$) among the N decision variables ($s_1$ to $s_N$) based on $\mathrm{sgn}(x_i)$.

When the process of S18 ends, the simulated bifurcation machine ends the process according to the simulated bifurcation algorithm.

Note that the number of repetitions of the time evolution processing (loop processing between S13 and S17) is determined in advance in accordance with the application. The calculation amount necessary for one cycle of processing (one cycle of S14 to S16) in the time evolution process does not change. Therefore, the simulated bifurcation machine can reduce the fluctuation in the solving time. Therefore, even when the simulated bifurcation machine is applied to a real-time system having a time constraint that the processing is required to be completed by a predetermined time, the solution can be reliably output by the predetermined time.

Moreover, for example, as disclosed in JP 2021-060864 A, the simulated bifurcation machine can be configured using a dedicated parallel processing circuit including a large number of arithmetic units. As a result, the simulated bifurcation machine can extremely shorten the calculation time for one cycle of processing in the time evolution process. In addition, unlike the case of software processing, in a simulated bifurcation machine mounted on a dedicated hardware circuit, any interrupt processing does not occur, so that the solving time is strictly fixed. For example, a simulated bifurcation machine mounted on a dedicated hardware circuit can fix the time until a solution is obtained in units of clock cycles. Therefore, in a case where the simulated bifurcation machine mounted on a dedicated hardware circuit is applied to a real-time system, it is possible to output a solution while more reliably protecting a time constraint.

FIG. 4 is a diagram illustrating a configuration of an information processing system including an Ising machine and a host device. An information processing system having a function of solving a combination optimization problem can be configured by, for example, an Ising machine and a host device. The host device executes a process other than a process executed by the Ising machine. In this case, the Ising machine is introduced for the purpose of reducing the solving time of the combination optimization problem and is considered as an accelerator or an off-loader. The host device includes a general-purpose processor, an off-loader other than an Ising machine, a memory, a storage, a sensor, an actuator, a communication interface, and the like.

The host device provides the Ising machine with at least information identifying the QUBO problem (matrix (Q)) or information identifying the Ising problem (matrix (J) and bias coefficient array (h)). The Ising machine may acquire information identifying the QUBO problem (matrix (Q)) and convert it into information identifying the Ising problem (matrix (J) and bias coefficient array (h)). Then, after the optimization processing, the Ising machine returns arrangement information ($s^{opt}$) representing N decision variables ($s_1$ to $s_N$) as a solution to the host device.

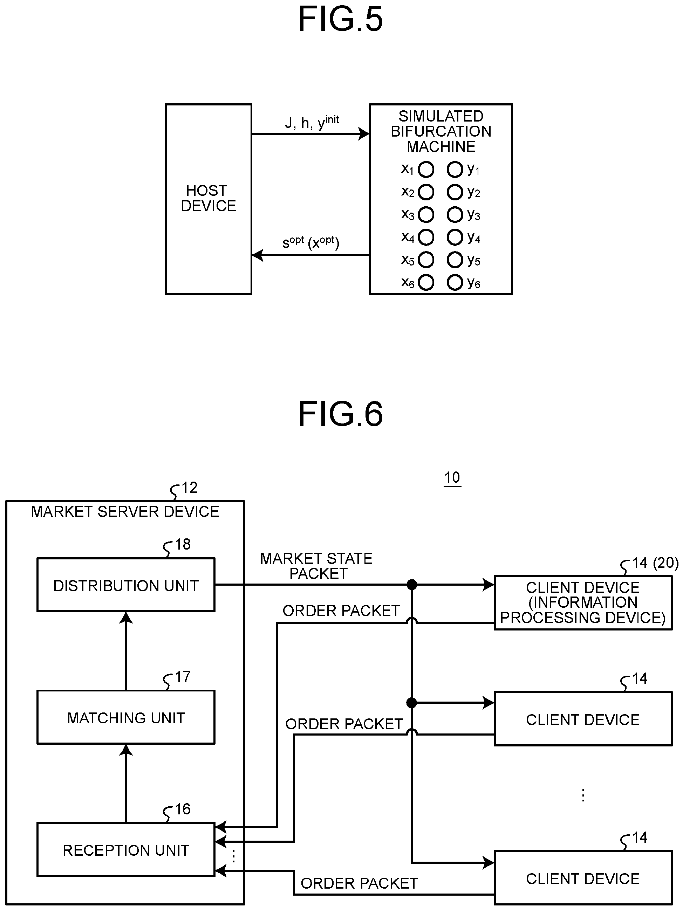

FIG. 5 is a diagram illustrating a configuration of an information processing system including a simulated bifurcation machine and a host device.

An information processing system having a function of solving a combination optimization problem may include a simulated bifurcation machine as an Ising machine. In this case, the host device provides the simulated bifurcation machine with information (matrix (J) and bias coefficient (h)) for identifying the Ising problem. Further, the host device may provide the simulated bifurcation machine with initial values of the N position variables ($x_1$ to $x_N$) and initial values of the N momentum variables ($y_1$ to $y_N$). In addition, the host device may provide the simulated bifurcation machine with various constants, functions (for example, K, $a_0$, $c_0$, a(t), and $\Delta t$), and the like used in the simulated bifurcation algorithm. After the optimization processing, the simulated bifurcation machine may return, as a solution, the arrangement information ($x^{opt}$) representing N position variables ($x_1$ to $x_N$) to the host device, instead of the arrangement information ($s^{opt}$) representing N decision variables ($s_1$ to $s_N$).

First Embodiment

Next, a market system 10 according to the first embodiment will be described.

FIG. 6 is a diagram illustrating a configuration of the market system 10. The market system 10 executes electronic transactions of a plurality of targets by a plurality of participants. More specifically, the market system 10 receives a buy order and a sell order from each of the participants for each of the targets, matches the price and the quantity of the received buy order with the price and the quantity of the sell order, and electronically establishes a transaction.

In the present embodiment, the market system 10 executes a trade transaction of a plurality of stocks (a plurality of names of stocks) as electronic transactions of a plurality of targets. Note that the target is not limited to stocks as long as it can be traded in the market, and may be securities such as bonds, stock investment trusts, real estate investment trusts, and futures thereof, financial products such as foreign exchange, interest rates, and interest rate futures, products such as gold, crude oil, and grains, and product futures thereof.

The market system 10 includes a market server device 12 and a plurality of client devices 14.

The market server device 12 is a computer used by a market manager. The market server device 12 is connected to a plurality of client devices 14 via a network.

Each of the client devices 14 is a device used by participants in the market. Each of the client devices 14 is realized by, for example, a computer.

Each of the client devices 14 determines which stock among the plurality of stocks to trade. Each of the client devices 14 generates an order packet including transaction information about the stock determined to be traded among the plurality of stocks to transmit the order packet to the market server device 12. The order packet includes, as transaction information, for example, identification information for identifying a stock to be traded among a plurality of stocks, a trade direction representing a sell order or a buy order for the stock identified by the identification information, a price (namely, the stock price), and a quantity (namely, the number of stocks). Note that the price is not limited to a specific value, and may be, for example, a value at the time of establishment of trade after the start of the market, or a value having a constant width.

The market server device 12 executes transactions of a plurality of stocks. The market server device 12 includes a reception unit 16, a matching unit 17, and a distribution unit 18.

The reception unit 16 receives an order packet transmitted from each of the client devices 14. The reception unit 16 provides the information about the received order packet to the matching unit 17.

The matching unit 17 performs matching between the price and the quantity of the sell order and the price and the quantity of the buy order for each of the stocks, and establishes a transaction between the sell order and the buy order in which the price and the quantity match in order of reception. The matching unit 17 provides the distribution unit 18 with information about an order for which a transaction has been established and information about an order for which a transaction has not been established.

Based on the information acquired from the matching unit 17, the distribution unit 18 simultaneously distributes the market state packet including the information indicating the stock transaction status to the plurality of client devices 14. For example, the market state packet is generated for each of the stocks. The market state packet includes identification information for identifying stocks, and a transaction price that is the latest price at which a transaction has been established for the stocks identified by the identification information.

In addition, the market state packet may include indication information for each of the stocks. The indication information is information indicating the price and the quantity of the buy order for which the transaction is not established and information indicating the price and the quantity of the sell order for which the transaction is not established for each of the stocks.

The distribution unit 18 irregularly distributes the market state packet. For example, when the transaction is established, the distribution unit 18 distributes the market state packet for the stock for which the transaction is established. For example, each of the client devices 14 acquires a market state packet irregularly distributed, and determines which stock among the plurality of stocks to trade based on information included in the acquired market state packet. Then, each of the client devices 14 generates an order packet for the determined stock to transmit the order packet to the market server device 12.

An information processing device 20 according to the present embodiment functions as the client device 14 in the market system 10. The information processing device 20 may be realized by a computer including a processor, a memory, and the like, or may have a configuration including a dedicated hardware circuit in addition to the processor, the memory, and the like.

Here, the information processing device 20 generates a combination optimization problem based on market state packets acquired irregularly, solves the generated combination optimization problem, and determines whether to trade for each of the stocks based on a solution of the combination optimization problem obtained by the solving.

In the present embodiment, the information processing device 20 uses the function shown in Expression (7) as the cost function in the combination optimization problem.

$$Cost = \sum_{i=1}^{N}\left\{\left(\alpha - \left|\frac{p_i(t)}{p_i(0)} - 1\right|\right) * b_i\right\} + \beta\left(\sum_{i=1}^{N}\left\{sgn\left(\frac{p_i(t)}{p_i(0)} - 1\right) * b_i\right\}\right)^2$$

$$\cdots (7)$$

In Expression (7), N is an integer of two or more, and represents the number of issues of a plurality of stocks traded in the market server device 12. i is an integer of one or more and N or less, and is an index for identifying each of the stocks.

The cost function of Expression (7) includes N decision variables. $b_i$ is a binary of 0 or 1, and is a decision variable indicating whether to trade the i-th stock among the plurality of stocks. In the present embodiment, $b_i$ represents 1 in a case where transaction is performed and 0 in a case where transaction is not performed.

t represents a time between the transaction start time and the transaction end time in one day. t is 0 at the transaction start time, and increases as time passes from the transaction start time. In the present embodiment, t is an integer and represents time by indexing.

$p_i(t)$ is a transaction price at time t in the i-th stock, namely, a stock price at time t. $p_i(0)$ is the transaction price of the i-th stock at the transaction start time, namely, a stock price at the transaction start time. $\alpha$ and $\beta$ are preset constants.

$p_i(t)/p_i(0)$ -1 represents a rate of change based on the transaction price at the transaction start time. In a case where $p_i(t)/p_i(0)$ -1 is greater than 0, it indicates that the price of the i-th stock is rising, and in a case where it is less than 0, it indicates that the price of the i-th stock is falling.

Also, sgn($p_i(t)/p_i(0)$-1) is a code function in which it +1 in a case where $p_i(t)/p_i(0)$-1 is 0 or more, and is -1 in a case where $p_i(t)/p_i(0)$-1 is less than 0.

The first term on the right side of the cost function of Expression (7) is a term for evaluating the difference between the rate of change in each of the stocks and the preset $\alpha$. Therefore, the cost function of Expression (7) decreases in a case of trading stocks with a rate of change greater than $\alpha$.

In addition, the information processing device 20 determines a trade direction for the i-th stock, namely, determines whether to place a sell order or a buy order, based on the rate of change. For example, in a case of placing a buy order in the case of a rising trend, namely, in a case of market follower, the information processing device 20 places a buy order in a case where the rate of change is positive, and places a sell order in a case where the rate of change is negative. On the other hand, for example, in a case of placing a sell order in a case of an upward trend, namely, in a case of contrarian, the information processing device 20 places a sell order in a case where the rate of change in the rate of change is positive, and places a buy order in a case where the rate of change in the rate of change is negative. In the present embodiment, the information processing device 20 places a sell order in a case where the rate of change is positive, and places a buy order in a case where the rate of change is negative.

The second term on the right side of the cost function of Expression (7) is a term for evaluating a difference between the number of stocks for which a sell order is placed and the number of stocks for which a buy order is placed. The second term on the right side of the cost function of Expression (7) is 0 in a case where the difference between the number of stocks for which a sell order is placed and the number of stocks for which a buy order is placed is 0, and increases as the difference increases. Therefore, the cost function of Expression (7) decreases, for example, in a case where a set of two stocks whose trade directions are opposite in which the absolute value of the difference between the rates of change is large, namely, the correlation of the rates of change is small, is traded. In addition, the cost function of Expression (7) decreases, for example, in a case of trading a stock group including a plurality of stocks in which the number of stocks for which a sell order is placed and the number of stocks for which a buy order is placed are the same, the stock group including a plurality of stocks in which the absolute value of the difference between the rates of change is large, namely, the correlation between the rates of change is small.

From the above, in the combination optimization problem that minimizes the cost function of Expression (7), it is possible to obtain a solution in which the risk is dispersed so as to reduce the difference between the number of stocks for which a sell order is placed and the number of stocks for which a buy order is placed while trading stocks having a large rate of change.

The information processing device 20 acquires a solution of the combination optimization problem that minimizes such a cost function, namely, the values of the N decision variables. The information processing device 20 determines to trade the stock corresponding to the decision variable having a value of 1 among the N decision variables. Then, the information processing device 20 generates an order packet including transaction information about the stock determined to execute transaction among the plurality of stocks to transmit the order packet to the market server device 12.

Note that the information processing device 20 may solve a combination optimization problem that minimizes a cost function other than the cost function shown in Expression (7).

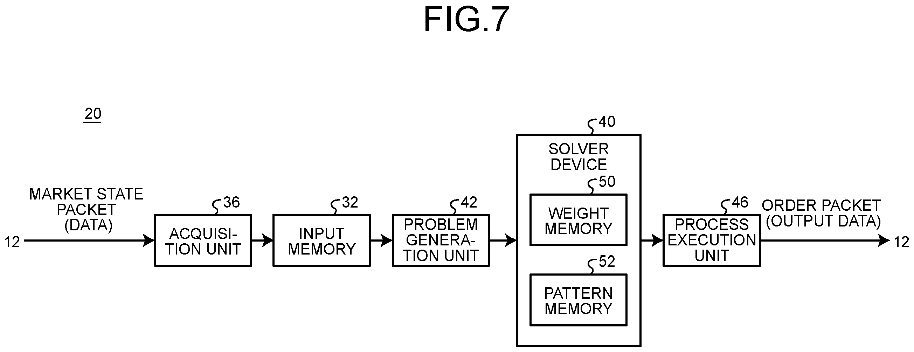

FIG. 7 is a diagram illustrating a configuration of the information processing device 20 according to the first embodiment.

The information processing device 20 acquires data given irregularly, generates a combination optimization problem based on the acquired data, and generates output data based on a solution of the generated combination optimization problem. Then, the information processing device 20 outputs the generated output data to a first device different from the information processing device 20. In the present embodiment, the information processing device 20 receives a market state packet irregularly provided from the market server device 12 as data. The information processing device 20 generates a combination optimization problem based on the received market state packet, and generates an order packet as output data based on a solution to the generated combination optimization problem. In the present embodiment, the information processing device 20 transmits the generated order packet to the market server device 12 which is an example of the first device.

The information processing device 20 includes an input memory 32, an acquisition unit 36, a solver device 40, a problem generation unit 42, and a process execution unit 46.

The input memory 32 stores a plurality of input values on which a plurality of weight values included in the cost function of the combination optimization problem is based. In the present embodiment, the input memory 32 stores values corresponding to a plurality of transaction prices as a plurality of input values. The values corresponding to the plurality of transaction prices stored in the input memory 32 correspond to the plurality of stocks on a one-to-one basis. The input memory 32 stores a value corresponding to the transaction price for each of the stocks. The value corresponding to the transaction price may be the transaction price or a value obtained by performing predetermined processing or calculation on the transaction price. For example, the value according to the transaction price may be a rate of change representing a ratio of the latest transaction price to the transaction price at the transaction start time.

The acquisition unit 36 acquires data irregularly and repeatedly provided. The data acquired by the acquisition unit 36 includes input information about at least one target among the plurality of targets. In a case of acquiring the data, the acquisition unit 36 rewrites the input value corresponding to the target related to the input information included in the acquired data among the plurality of input values stored in the input memory 32 based on the input information included in the acquired data.

In the present embodiment, the acquisition unit 36 acquires a market state packet, which is an example of data repeatedly given irregularly, from the market server device 12. The market state packet includes a transaction price of at least one stock among the plurality of stocks as the input information. Then, in a case of acquiring the market state packet, the acquisition unit 36 rewrites a value corresponding to the transaction price for the stock indicated in the acquired market state packet among the values corresponding to the transaction prices for each of the stocks stored in the input memory 32 based on the transaction price included in the acquired market state packet.

The solver device 40 receives the combination optimization problem from the problem generation unit 42 and solves the received combination optimization problem. Then, the solver device 40 outputs a solution of the received combination optimization problem. In the present embodiment, the solver device 40 is a simulated bifurcation machine that is one of the Ising machines, and is implemented in a dedicated hardware circuit. Note that the solver device 40 may solve the combination optimization problem based on another algorithm instead of the simulated bifurcation machine.

Moreover, in the present embodiment, the solver device 40 includes a weight memory 50 (first memory) and a pattern memory 52 (second memory). The weight memory 50 stores a plurality of weight values included in the cost function of the combination optimization problem. For example, the weight memory 50 stores a matrix (J) representing a plurality of weight values included in the cost function shown in Expression (7) and a bias coefficient array (h). The pattern memory 52 stores pattern information (first information) indicating a storage position of each of the weight values in the weight memory 50.

The problem generation unit 42 generates a combination optimization problem based on the data acquired by the acquisition unit 36, and causes the solver device 40 to solve the generated combination optimization problem. More specifically, the problem generation unit 42 generates a plurality of weight values included in the cost function in the combination optimization problem based on a plurality of input values stored in the input memory 32, and writes the plurality of generated weight values in the weight memory 50. In the present embodiment, the solver device 40 is an Ising machine, and the combination optimization problem is an Ising problem. Therefore, the problem generation unit 42 generates the matrix (J) and the bias coefficient array (h), and writes the generated matrix (J) and bias coefficient array (h) into the weight memory 50.

In the present embodiment, the problem generation unit 42 generates a combination optimization problem that minimizes the cost function shown in Expression (7). More specifically, the problem generation unit 42 generates a plurality of weight values included in the cost function of the combination optimization problem shown in Expression (7) based on the plurality of input values stored in the input memory 32, and writes the plurality of generated weight values in the weight memory 50. More specifically, the problem generation unit 42 generates the matrix (J) and the bias coefficient array (h) obtained by Expression (7) based on the values corresponding to the transaction prices of the plurality of stocks stored in the input memory 32, and writes the generated matrix (J) and bias coefficient array (h) into the weight memory 50.

Further, the problem generation unit 42 generates pattern information for identifying the storage position of each of the weight values in the weight memory 50. Then, the problem generation unit 42 writes the generated pattern information in the pattern memory 52.

Moreover, the problem generation unit 42 generates a combination optimization problem in response to acquiring data or in a preset cycle, and causes the solver device 40 to solve the combination optimization problem. In the present embodiment, the problem generation unit 42 generates the combination optimization problem in response to the acquisition unit 36 acquiring the market state packet or at a preset cycle, and causes the solver device 40 to solve the combination optimization problem.

However, the problem generation unit 42 does not generate a new combination optimization problem even if the acquisition unit 36 acquires a new market state packet during the solving process period from the start of the generation of the combination optimization problem to the output of the solution of the generated combination optimization problem. In addition, the preset cycle is longer than the time required from the start of the generation of the combination optimization problem to the output of the solution of the generated combination optimization problem. In addition, the preset cycle may not be every constant time, and may vary with time.

The process execution unit 46 acquires a solution of the combination optimization problem from the solver device 40. In the present embodiment, the process execution unit 46 acquires the values (0 or 1) of the plurality of decision variables ($b_1$ to $b_N$) included in Expression (7) as solutions. The process execution unit 46 executes a process based on the acquired solution in response to acquiring the solution from the solver device 40.

For example, in a case where the solution of the combination optimization problem is acquired from the solver device 40, the process execution unit 46 generates output data including output information indicating that a predetermined operation is performed on at least one stock identified by the solution among the plurality of stocks based on the acquired solution. Then, the process execution unit 46 outputs the output data to the first device.

In the present embodiment, in a case of acquiring the solution of the combination optimization problem from the solver device 40, the process execution unit 46 generates an order packet that is an example of output data. The order packet includes, as the output information, transaction information indicating that a buy order or a sell order, which is a predetermined operation, is to be placed for the stock corresponding to the decision variable having the value (1) indicating that the transaction is to be performed among the values of the plurality of decision variables ($b_1$ to $b_N$). Then, the process execution unit 46 outputs the generated order packet to the market server device 12 which is an example of the first device.

Here, in the present embodiment, a plurality of weight values included in the cost function in the combination optimization problem is identified by an index representing a position in a predetermined first region. For example, the plurality of weight values included in the second term on the right side of Expression (7) is identified by an index (i, j) representing a row number (i) and a column number (j) of a matrix (J) in N rows × N columns.

Moreover, in the present embodiment, the first partial weight group that is part of the weight values is the same as the second partial weight group that is other part of the weight values. For example, the first partial weight group included in a first partial region that is part of a predetermined first region is the same as a second partial weight group included in a second partial region that is another part of the predetermined first region. For example, the N weight values included in the first row in the matrix (J) in N rows × N columns are the same as the N weight values included in the second row in the matrix (J).

In the present embodiment, the problem generation unit 42 writes the first partial weight group and the second partial weight group in a common region in the weight memory 50. Then, the solver device 40 reads each of the weight values from the weight memory 50 based on the pattern information stored in the pattern memory 52, and obtains the solution.

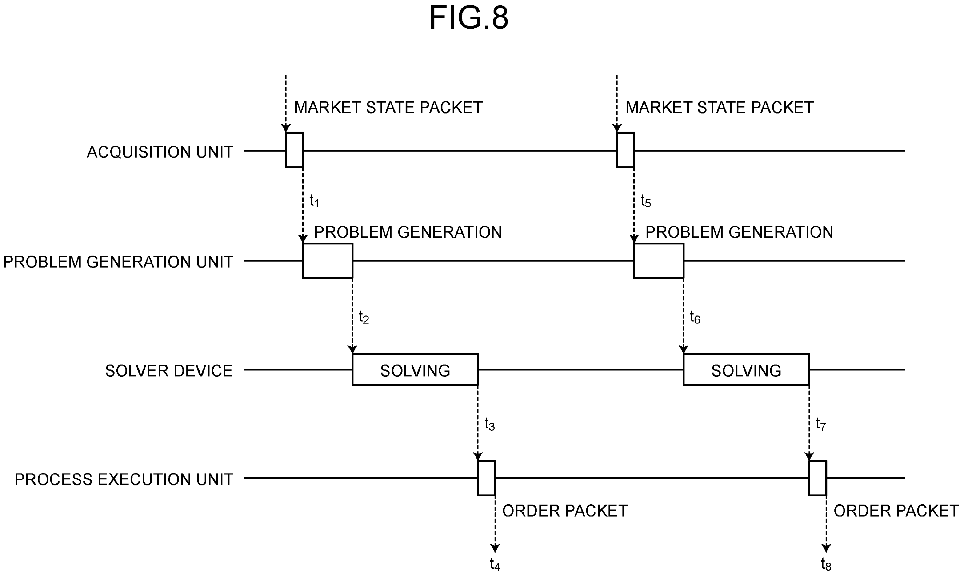

FIG. 8 is a timing chart illustrating processing timing of the information processing device 20. The information processing device 20 executes a process in the procedure illustrated in FIG. 8, for example.

In a case of acquiring the market state packet from the market server device 12, the acquisition unit 36 rewrites a value corresponding to the transaction price of the stock related to the transaction price included in the market state packet among the values corresponding to the transaction prices of the plurality of stocks stored in the input memory 32. As a result, the value corresponding to the transaction price of each of the stocks stored in the input memory 32 is changed ($t_1$ and $t_5$ in FIG. 8).

The problem generation unit 42 generates a plurality of weight values included in the cost function in the combination optimization problem based on the value corresponding to the transaction price of each of the stocks stored in the input memory 32. Then, the problem generation unit 42 writes the plurality of generated weight values in the weight memory 50 of the solver device 40, and causes the solver device 40 to execute a solving process ($t_2$ and $t_6$ in FIG. 8). For example, the problem generation unit 42 and the solver device 40 execute problem generation every time a market state packet is acquired from the market server device 12 or every predetermined time.

The solver device 40 starts the solving process after the plurality of weight values is written in the weight memory 50. In a case where the solving process is completed, the solver device 40 gives the solution of the combination optimization problem to the process execution unit 46 ($t_3$ and $t_7$ in FIG. 8).

The process execution unit 46 generates an order packet in response to acquiring the solution of the combination optimization problem from the solver device 40. Then, the process execution unit 46 outputs the generated order packet to the market server device 12 ($t_4$ and $t_8$ in FIG. 8).

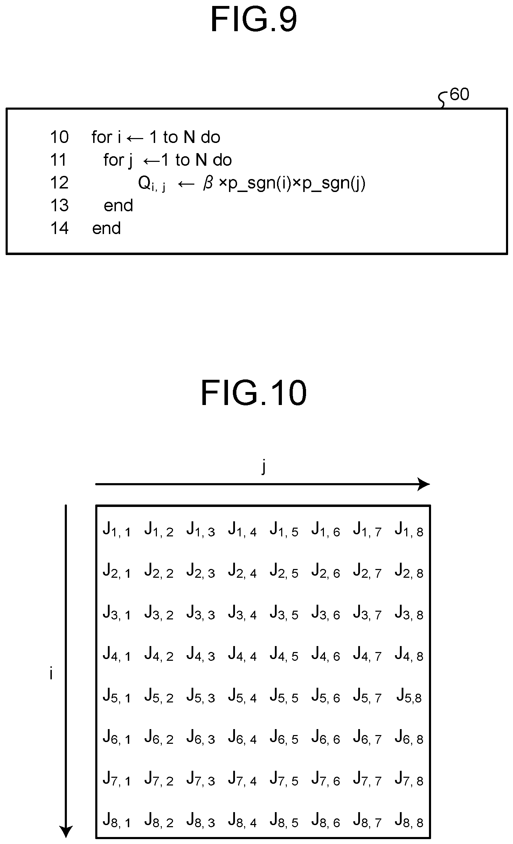

FIG. 9 is a diagram illustrating a pseudo code 60 for generating a Q matrix in QUBO from the second term on the right side of Expression (7).

For example, each of the N rows in the matrix (J) included in the second term on the right side of Expression (7) is represented by one of two patterns as described below.

First, it is considered to generate a Q matrix of N rows × N columns in QUBO from the second term on the right side of Expression (7). In a case where the Q matrix of N rows × N columns in QUBO is generated from the second term on the right side of Expression (7), the problem generation unit 42 executes the pseudo code 60 illustrated in FIG. 9.

p_sgn(i) represents sgn($p_i$(t)/$p_i$(0)-1). p_sgn(j) represents sgn($p_j$(t)/$p_j$(0)-1).

N weight values ($Q_{1,1}$, $Q_{1,2}$,..., $Q_{1,N}$,) included in the first row of the Q matrix are {$\beta \times$p_sgn(1)$\times$p_sgn(1), $\beta \times$p_sgn(1)$\times$p_sgn(2),..., $\beta \times$p_sgn(1)$\times$p_sgn(N)}.

p_sgn(i) and p_sgn(j) are +1 or -1. Therefore, N weight values ($Q_{1,1}$, $Q_{1,2}$,..., $Q_{1,N}$,) included in the first row of the Q matrix are {$\beta \times$p_sgn(1), $\beta \times$p_sgn(2),..., $\beta \times$p_sgn(N)} in a case where $\beta \times$p_sgn(1) is +1. N weight values ($Q_{1,1}$, $Q_{1,2}$,..., $Q_{1,N}$,) included in the first row of the Q matrix are {-$\beta \times$p_sgn(1), -$\beta \times$p_sgn(2),..., -$\beta \times$p_sgn(N)} in a case where $\beta \times$p_sgn(1) is -1. The other rows other than the first row of the Q matrix are similar to the first row.

Each of the N rows in the Q matrix is one of the two patterns {$\beta \times$p_sgn(1), $\beta \times$p_sgn(2),..., $\beta \times$p_sgn(N)} and {-$\beta \times$p_sgn(1), -$\beta \times$p_sgn(2),..., -$\beta \times$p_sgn(N)}.

Similarly, in a case where the Q matrix is converted into the matrix (J) in the Ising problem, each of the N rows is one of the two patterns.

Each of the N rows in the matrix (J) is one of the first pattern of {-0.5$\times \beta \times$p_sgn(1), -0.5$\times \beta \times$p_sgn(2),..., -0.5$\times \beta \times$p_sgn(N)} and the second pattern of {0.5$\times \beta \times$p_sgn(1), 0.5$\times \beta \times$p_sgn(2),..., 0.5$\times \beta \times$p_sgn(N)}.

In the present embodiment, in a case of generating the matrix (J) included in the second term on the right side of Expression (7), the problem generation unit 42 generates the first pattern and the second pattern instead of generating all the N rows. Then, the problem generation unit 42 writes two patterns of the first pattern and the second pattern, namely, 2×N weight values, into the weight memory 50.

For example, the weight memory 50 includes a first storage region and a second storage region. In this case, the problem generation unit 42 writes the N weight values of the first pattern in the first storage region and writes the N weight values of the second pattern in the second storage region.

Further, the problem generation unit 42 generates pattern information indicating whether each of the N rows in the matrix (J) included in the second term on the right side of Expression (7) is the first pattern or the second pattern. For example, the problem generation unit 42 calculates $\beta \times$p_sgn(i) for each of the first to N-th rows. Subsequently, the problem generation unit 42 generates pattern information indicating the value (+1 or - 1) of $\beta \times$p_sgn(i) for each of the first to N-th rows. Then, the problem generation unit 42 writes the generated pattern information in the pattern memory 52.

In a case where the N×N weight values included in the matrix (J) are read from the weight memory 50 during the solving of the combination optimization problem, the solver device 40 refers to the pattern information stored in the pattern memory 52 to determine whether the row of the target weight value to be read is the first pattern or the second pattern.

Then, in a case where the row of the target weight value is the first pattern, the solver device 40 reads the weight value corresponding to the column of the target weight value among the N weight values stored in the first storage region in the weight memory 50. In addition, in a case where the row of the target weight value is the second pattern, the solver device 40 reads the weight value corresponding to the column of the target weight value among the N weight values stored in the second storage region in the weight memory 50. As a result, the solver device 40 can read each of the $N \times N$ weight values based on the N weight values of the first pattern, the N weight values of the second pattern, and the pattern information.

As described above, the information processing device 20 according to the first embodiment stores the first partial weight group and the second weight group having the same pattern among the plurality of weight values included in the cost function in the combination optimization problem in the common region of the weight memory 50. As a result, the information processing device 20 is only required to generate part of the plurality of weight values instead of generating all of the plurality of weight values, so that the combination optimization problem can be generated in a time shorter than the generation time in the case of generating all of the plurality of weight values. Therefore, the information processing device 20 can generate the combination optimization problem at high speed and cause the solver device 40 to start solving at an early stage.

Moreover, since the solver device 40 is only required to store part of the plurality of weight values without storing all of the plurality of weight values, the size of the weight memory 50 can be reduced. As a result, the information processing device 20 according to the present embodiment can reduce the configuration of the solver device 40.

Second Embodiment

Next, a market system 10 according to the second embodiment will be described. Since the market system 10 according to the second embodiment has substantially the same function and configuration as those of the first embodiment, elements having substantially the same function and configuration are denoted by the same reference numerals, and detailed description thereof will be omitted except for differences. The same applies to the third and subsequent embodiments.

FIG. 10 is a diagram illustrating an example of a plurality of weight values included in the cost function in the combination optimization problem according to the second embodiment.

For example, each of the weight values is identified by an index representing a position in a predetermined first region. For example, in a case where a plurality of weight values is represented by a matrix, each of the weight values is identified by an index represented by a set of a row number and a column number in the matrix. In the present embodiment, the number of a row in the matrix is represented as i. Moreover, the number of a column in the matrix is represented as j.

In the present embodiment, the predetermined first region is a two-dimensional space represented using a matrix. However, the predetermined first region may be a one-dimensional space represented by an array, or may be a multidimensional space such as a three-dimensional space and a four-dimensional space represented by a tensor.

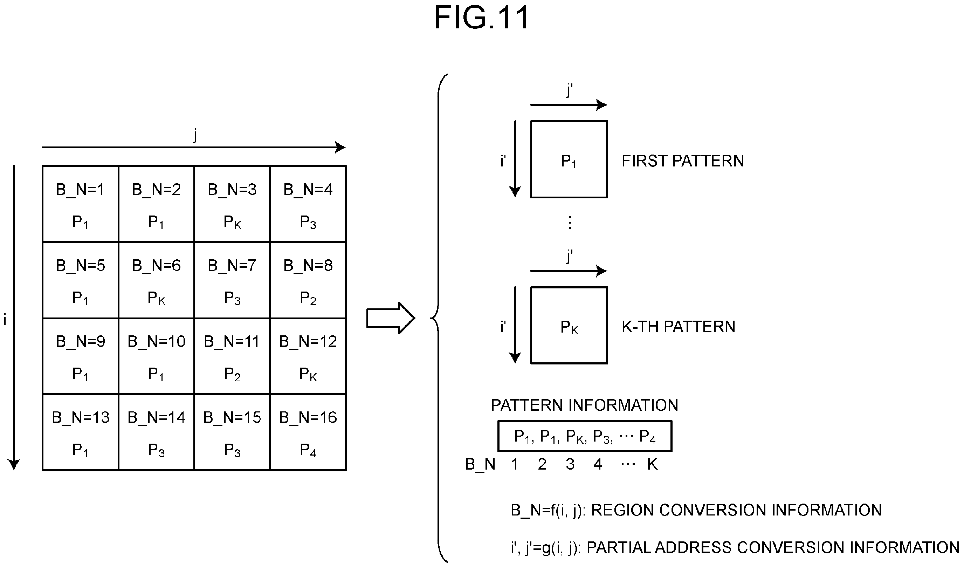

FIG. 11 is a diagram illustrating an example of M partial regions, K patterns, pattern information, region conversion information, and partial address conversion information.

In the present embodiment, the predetermined first region in which the plurality of weight values is disposed is divided into M regions having the same shape. M is an integer of three or more.

In the example of FIG. 11, the predetermined first region is divided into four partial regions in the row direction and divided into four partial regions in the column direction. That is, in the example of FIG. 11, the predetermined first region is divided into 16 partial regions having the same shape. In a case where the predetermined first region is a multidimensional space such as a four-dimensional space, each of the M partial regions may be a multidimensional space.

Further, each of the M partial regions is identified by a block number (B_N). For example, in FIG. 11, each of the 16 partial regions is identified by a block number (B_N) from 1 to 16.

A partial weight group that is part of the plurality of weight values is disposed in each of the M partial regions. The partial weight group disposed in each of the M partial regions is represented by any of the K patterns (K is an integer of 2 or more and less than M.). Two or more partial regions including the same pattern among the M partial regions include the same partial weight group.

In addition, the pattern information indicates that each of the M partial regions includes the partial weight group of which pattern among the K patterns. For example, the pattern information includes information (Pk) for identifying a pattern using a block number (B_N) as an index.

Moreover, the region conversion information is information for converting an index representing the position of the target weight value in the predetermined first region into a block number (B_N) for identifying a partial region including the target weight value among the M partial regions. For example, the region conversion information is a function $\{f(i,j)\}$ that converts a set of a row number(i) and a column number (j) into a block number (B_N).

Moreover, the partial address conversion information is information for converting an index representing the position of the target weight value in the predetermined first region into a partial address (i', j') representing the position of the target weight value in the partial region. For example, the partial address conversion information may be a function {g(i,j)} that converts a set of the row number(i) and the column number (j) into a partial address (i', j').

In the present embodiment, the problem generation unit 42 generates the K patterns, the pattern information, the region conversion information, and the partial address conversion information in generating the combination optimization problem. Then, the problem generation unit 42 gives the generated K patterns, pattern information, region conversion information, and partial address conversion information to the solver device 40.

Note that, in a case where the division positions of the M partial regions with respect to the predetermined first region are fixed, the problem generation unit 42 may not generate the region conversion information and the partial address conversion information. In this case, the region conversion information and the partial address conversion information are set in advance in the solver device 40.

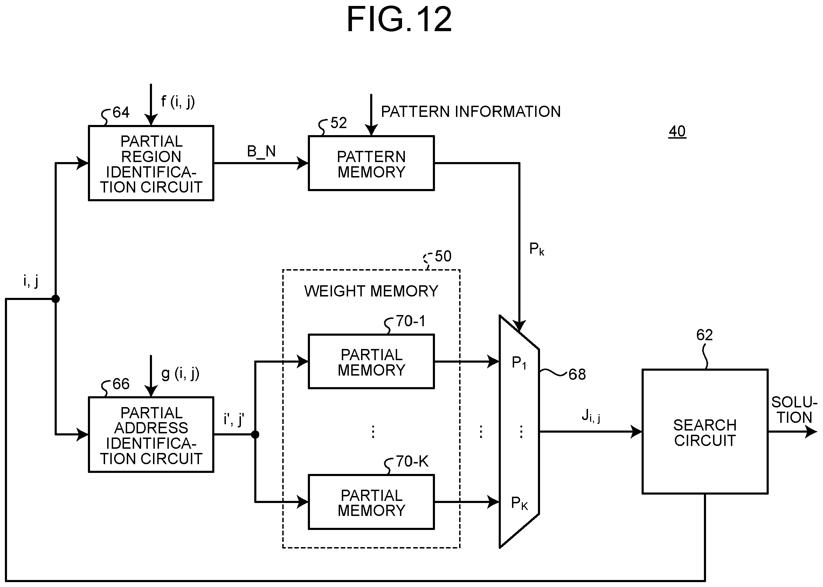

FIG. 12 is a diagram illustrating a configuration of the solver device 40 according to the second embodiment.

The solver device 40 according to the second embodiment includes a search circuit 62, a partial region identification circuit 64, a partial address identification circuit 66, a weight memory 50, a pattern memory 52, and a selector 68.

The search circuit 62 reads each of the weight values stored in the weight memory 50 and searches for a solution that minimizes the cost function. In a case of reading the target weight value ($J_{i,j}$) among the plurality of weight values, the search circuit 62 identifies an index representing the position of the target weight value ($J_{i,j}$) in the predetermined first region. For example, the search circuit 62 designates a row number(i) and a column number (j) of the target weight value ($J_{i,j}$) as an index.

The partial region identification circuit 64 receives region conversion information (f(i,j)) from the problem generation unit 42. In a case where the division positions of the M partial regions with respect to the predetermined first region are fixed, the partial region identification circuit 64 may set region conversion information (f(i,j)) in advance.

In a case where the search circuit 62 reads the target weight value ($J_{i,j}$), the partial region identification circuit 64 acquires the row number (i) and the column number (j) of the target weight value ($J_{i,j}$) as an index. Then, based on the region conversion information (f(i,j)) and the index of the target weight value ($J_{i,j}$), the partial region identification circuit 64 outputs a block number (B_N) for identifying a target partial region including the target weight value ($J_{i,j}$) among the M partial regions.

The partial address identification circuit 66 receives partial address conversion information (g(i,j)) from the problem generation unit 42. In a case where the division positions of the M partial regions with respect to the predetermined first region are fixed, the partial address identification circuit 66 may set partial address conversion information (g(i,j)) in advance.

In a case where the search circuit 62 reads the target weight value ($J_{i,j}$), the partial address identification circuit 66 acquires the row number (i) and the column number (j) of the target weight value ($J_{i,j}$). Then, the partial address identification circuit 66 outputs the target partial address (i', j') indicating the position of the target weight value ($J_{i,j}$) in the target partial region based on the partial address conversion information (g(i,j)) and the index of the target weight value ($J_{i,j}$).

In the pattern memory 52, pattern information is written from the problem generation unit 42. The pattern memory 52 receives the block number (B_N) from the partial region identification circuit 64. In a case of receiving the block number (B N), the pattern memory 52 outputs information (Pk) indicating a pattern identified by the received block number (B_N) in the stored pattern information.

The weight memory 50 includes K partial memories 70-1 to 70-K. The K partial memories 70-1 to 70-K correspond to the K patterns on a one-to-one basis. The k-th partial memory 70-k, where k is an integer of one or more and K or less, among the K partial memories 70-1 to 70-K corresponds to the k-th pattern among the K patterns. In each of the K partial memories 70-1 to 70-K, a partial weight group of a corresponding pattern among the K patterns is written by the problem generation unit 42. The partial weight group of the k-th pattern is written in the k-th partial memory 70-k.

Each of the K partial memories 70-1 to 70-K receives the target partial address (i', j') from the partial address identification circuit 66. In a case of receiving the target partial address (i', j'), each of the K partial memories 70-1 to 70-K outputs the weight value identified by the target partial address (i', j') of the stored partial weight group.

The selector 68 receives information (Pk) indicating a pattern identified by the block number (B_N) from the pattern memory 52. In a case of receiving the information (Pk) indicating the pattern, the selector 68 selects one partial memory 70 designated by the received information (Pk) indicating the pattern among the K partial memories 70-1 to 70-K. Then, the selector 68 gives the weight value output from the selected partial memory 70 from the pattern memory 52 to the search circuit 62 as the target weight value ($J_{i,j}$).

As described above, in a case of reading the target weight value among the plurality of weight values, the solver device 40 identifies the target partial region including the target weight value among the M partial regions. Subsequently, the solver device 40 identifies a target pattern in a target partial region among the K patterns based on the pattern information. Subsequently, the solver device 40 identifies a target partial address representing the position of the target weight value in the target partial region. Then, the solver device 40 reads the weight value identified by the target partial address in the partial weight group of the target pattern from the weight memory 50 as the target weight value. As a result, the solver device 40 can read the target weight value ($J_{i,j}$) from the K patterns.

As described above, the information processing device 20 according to the second embodiment stores the partial weight groups of the K patterns in the weight memory 50. As a result, the information processing device 20 is only required to generate a partial weight group of K patterns instead of generating all of the plurality of weight values, so that the combination optimization problem can be generated in a time shorter than the generation time in a case of generating all of the plurality of weight values. Therefore, the information processing device 20 can generate the combination optimization problem at high speed and cause the solver device 40 to start solving at an early stage.

Moreover, since the solver device 40 is only required to store the partial weight groups of K patterns without storing all of the plurality of weight values, the size of the weight memory 50 can be reduced. As a result, the information processing device 20 according to the present embodiment can reduce the configuration of the solver device 40.

Third Embodiment

Next, a market system 10 according to the third embodiment will be described.

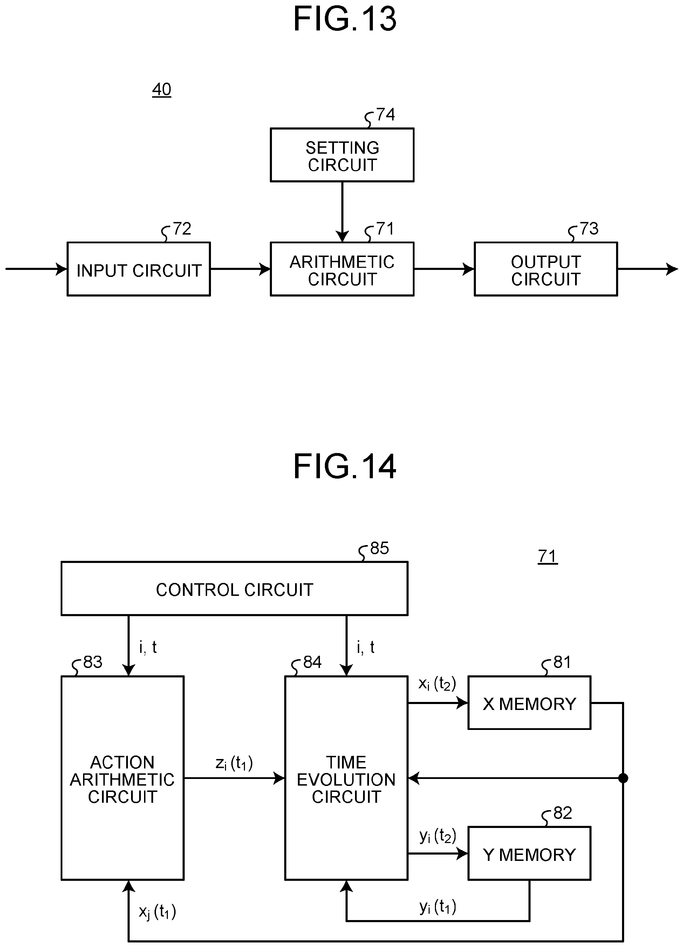

FIG. 13 is a diagram illustrating a configuration of the solver device 40 according to the third embodiment. The information processing device 20 according to the third embodiment includes a solver device 40 that executes a simulated bifurcation algorithm.

The solver device 40 includes an arithmetic circuit 71, an input circuit 72, an output circuit 73, and a setting circuit 74.

The arithmetic circuit 71 increases t, which is a parameter representing time, by a unit time ($\Delta t$) from the initial time (for example, 0) to the end time. The arithmetic circuit 71 calculates a first variable ($x_i$) and a second variable ($y_i$) associated with each of the N virtual points (virtual particles). The N virtual points correspond to N spins in the Ising model. The i-th virtual point among the N virtual points corresponds to the i-th spin among the N spins in the Ising model.

The first variable ($x_i$) is a position variable representing the position of the corresponding virtual point. The second variable ($y_i$) is a momentum variable representing the momentum of the corresponding virtual point.

The arithmetic circuit 71 sequentially and alternately calculates each of the N first variables ($x_i$) and each of the N second variables ($y_i$) every unit time from the initial time to the end time. More specifically, the arithmetic circuit 71 executes the operations indicated by the algorithms of Expressions (4-1) and (4-2) for each unit time from the initial time to the end time. Note that the arithmetic circuit 71 may execute the operations indicated by the algorithms of Expressions (5-1), (5-2), and (5-3), or may execute the operations indicated by the algorithms of Expressions (6-1), (6-2), and (6-3). Then, the arithmetic circuit 71 binarizes the value (namely, the position of each of the N virtual points) of each of the N first variables ($x_i$) at the end time to calculate the solution of the combination optimization problem.

Prior to the arithmetic process by the arithmetic circuit 71, the input circuit 72 acquires the initial values of the N first variables ($x_i$) and the N second variables ($y_i$) at the initial time and gives the initial values to the arithmetic circuit 71. The output circuit 73 acquires the solution of the combination optimization problem from the arithmetic circuit 71 after the end of the arithmetic process by the arithmetic circuit 71. Then, the output circuit 73 outputs the acquired solution. The setting circuit 74 sets each parameter to the arithmetic circuit 71 prior to the arithmetic process by the arithmetic circuit 71.

FIG. 14 is a diagram illustrating a block configuration of the arithmetic circuit 71. In the description of FIG. 14, the target time (second time) is any time in a case where the time from the initial time to the end time is divided for each unit time. In the description of FIG. 14, the immediately preceding time (first time) is represented as $t_1$. The target time (second time) is represented as $t_2$.

The arithmetic circuit 71 includes an X memory 81, a Y memory 82, an action arithmetic circuit 83, a time evolution circuit 84 (first circuit), and a control circuit 85.

The X memory 81 stores N first variables ($x_i(t_1)$) at the immediately preceding time (ti). In the X memory 81, the stored N first variables ($x_i(t_1)$) at the immediately preceding time (ti) are rewritten with the update of the time. Namely, in the X memory 81, in a case where the N first variables ($x_i(t_2)$) at the target time ($t_2$) are calculated, the calculated N first variables ($x_i(t_2)$) at the target time ($t_2$) are written as the N first variables ($x_i(t_1)$) at the new immediately preceding time (ti). Prior to the operation, the setting circuit 74 writes the N first variables x; at the initial time into the X memory 81.

The Y memory 82 stores N second variables ($y_i(t_1)$) at the immediately preceding time (ti). In the Y memory 82, the stored N second variables ($y_i(t_1)$) at the immediately preceding time (ti) are rewritten with the update of the time. Namely, in the Y memory 82, in a case where the N second variables ($y_i(t_2)$) at the target time ($t_2$) are calculated, the calculated N second variables ($y_i(t_2)$) at the target time ($t_2$) are written as the N second variables ($y_i(t_1)$) at the new immediately preceding time (ti). Prior to the operation, the setting circuit 74 writes the N second variables y; at the initial time into the Y memory 82.

The action arithmetic circuit 83 acquires N first variables ($x_i(t_1)$) at the immediately preceding time (ti) from the X memory 81. Then, the action arithmetic circuit 83 calculates an update value ($z_i(t_1)$) at the immediately preceding time (ti) for each of the N virtual points.

The time evolution circuit 84 acquires the update value ($z_i(t_1)$) at the immediately preceding time (ti) from the action arithmetic circuit 83 for each of the N virtual points. Further, the time evolution circuit 84 acquires the first variable ($x_i$ ($t_1$)) at the immediately preceding time (ti) from the X memory 81 and acquires the second variable ($y_i(t_1)$) at the immediately preceding time (ti) from the Y memory 82 for each of the N virtual points. Then, the time evolution circuit 84 calculates the first variable ($x_i(t_2)$) at the target time ($t_2$) for each of the N virtual points, and rewrites the first variable ($x_i(t_1)$) at the immediately preceding time (ti) stored in the X memory 81. At the same time, the time evolution circuit 84 calculates the second variable ($y_i(t_2)$) at the target time ($t_2$) for each of the N virtual points, and rewrites the second variable ($y_i(t_1)$) at the immediately preceding time (ti) stored in the Y memory 82.

The control circuit 85 sequentially updates the target time ($t_2$) every unit time ($\Delta t$) to cause the action arithmetic circuit 83 and the time evolution circuit 84 to sequentially calculate the first variable ($x_i(t)$) and the second variable ($y_i(t)$) every unit time ($\Delta t$).

Further, the control circuit 85 generates an index (i) for identifying N virtual points by incrementing from 1 to N for each unit time. The control circuit 85 gives the index (i) to the action arithmetic circuit 83 and the time evolution circuit 84, and causes them to calculate the first variable ($x_i(t_2)$) at the target time ($t_2$) and the second variable ($y_i(t_2)$) at the target time ($t_2$) corresponding to each of the N virtual points in the index order. Note that the action arithmetic circuit 83 and the time evolution circuit 84 may calculate a plurality of first variables ($x_i(t_2)$) and a plurality of second variables ($y_i(t_2)$) corresponding to a plurality of indexes in parallel.

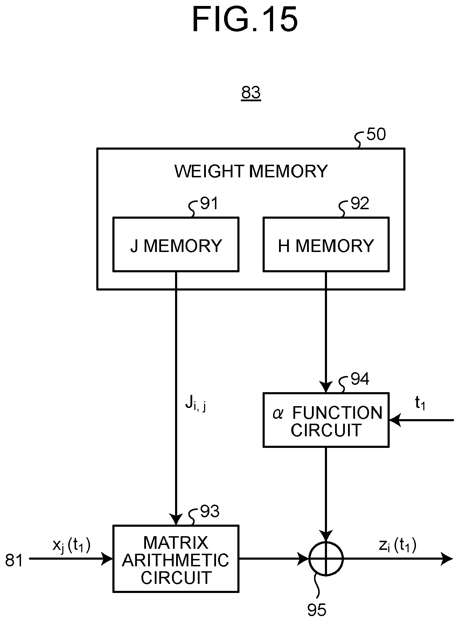

FIG. 15 is a diagram illustrating a configuration of the action arithmetic circuit 83. The action arithmetic circuit 83 includes a weight memory 50, a matrix arithmetic circuit 93, an $\alpha$ function circuit 94, and a first addition circuit 95. The weight memory 50 includes a J memory 91 and an H memory 92.

The J memory 91 stores a pattern for generating an N×N matrix (J) including (N×N) weight values. $J_{i,j}$ represents a weight value of the i-th row and the j-th column included in the matrix. $J_{i,j}$ corresponds to a coupling coefficient of the i-th spin and the j-th spin in the Ising model. Prior to the operation, the setting circuit 74 writes the pattern for generating the matrix (J) generated by the problem generation unit 42 in the J memory 91.

The H memory 92 stores an array including N bias coefficients. $h_i$ represents an i-th bias coefficient included in the array. $h_i$ corresponds to a local magnetic field coefficient acting on the i-th spin in the Ising model. Prior to the operation, the setting circuit 74 writes the array, including the N bias coefficients, generated by the problem generation unit 42 into the H memory 92.

The matrix arithmetic circuit 93 acquires N first variables ($x_j(t_1)$) at the immediately preceding time (ti) from the X memory 81. The matrix arithmetic circuit 93 acquires N weight values $J_{i,j}$ included in the target row from the J memory 91 for each of the N virtual points. Then, the matrix arithmetic circuit 93 executes, for each of the N virtual points, a product-sum operation on the N first variables ($x_j(t_1)$) at the immediately preceding time (ti) and the N weight values $J_{i,j}$ included in the target row.

The $\alpha$ function circuit 94 acquires the target bias coefficient $h_i$ from the H memory 92 for each of the N virtual points. The $\alpha$ function circuit 94 executes an operation of {$-h_i\alpha(t_1)$} for each of the N virtual points. $\alpha(t)$ is a preset function.

The first addition circuit 95 adds the product-sum operation result by the matrix arithmetic circuit 93 to the operation result by the $\alpha$ function circuit 94 for each of the N virtual points. By this operation, the first addition circuit 95 outputs the update value ($z_i(t_1)$) at the immediately preceding time (ti) represented by Expression (8) for each of the N virtual points.

$$z_i(t_1) = -h_i\alpha(t_1) - \sum_{j=1}^{N} J_{i,j}x_j(t_1) \quad \cdots (8)$$

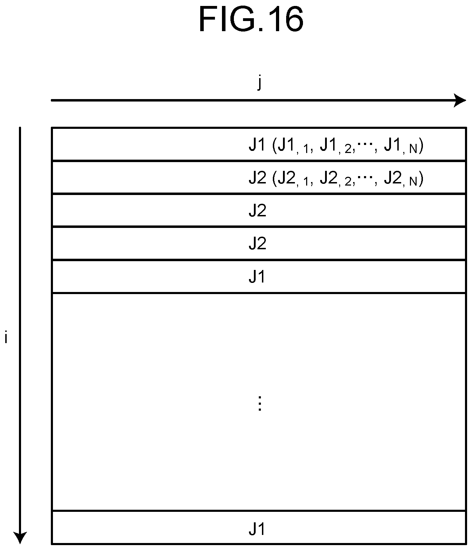

FIG. 16 is a diagram illustrating an example of a matrix (J). In the third embodiment, in the matrix (J) including N×N weight values, the N weight values included in each of the N rows are either the first pattern {J1(J1$_{,1}$, J1$_{,2}$,..., J1$_{,N}$)} or the second pattern {J2(J2$_{,1}$, J2$_{,2}$,..., J2$_{,N}$)}.

The problem generation unit 42 according to the third embodiment generates the first pattern and the second pattern as the matrix (J) and stores the first pattern and the second pattern in the J memory 91. In addition, the problem generation unit 42 generates pattern information indicating whether each of the N rows in the matrix (J) is the first pattern or the second pattern, and provides the pattern information to the matrix arithmetic circuit 93.

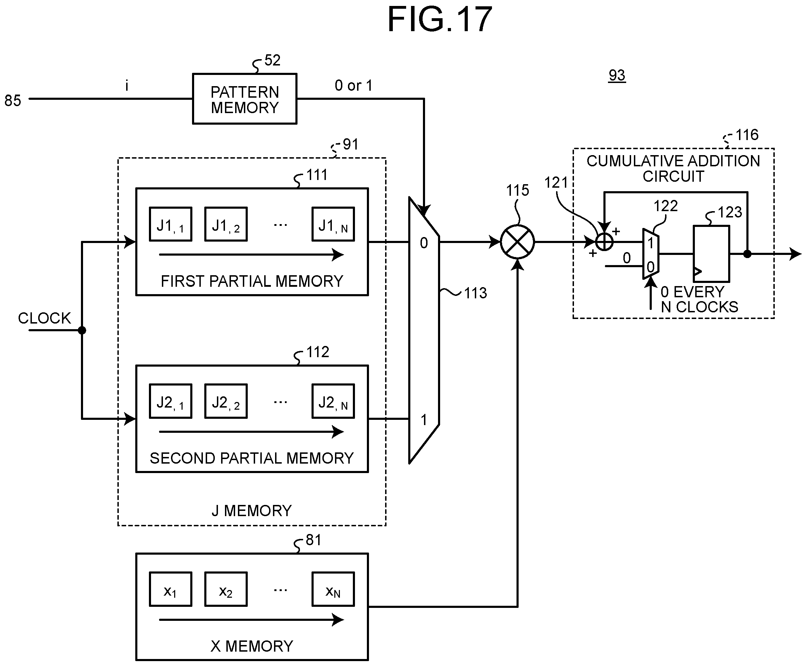

FIG. 17 is a diagram illustrating a configuration of the matrix arithmetic circuit 93 according to the third embodiment together with the J memory 91 and the X memory 81.

The J memory 91 includes a first partial memory 111 and a second partial memory 112.

The first partial memory 111 stores N weight values {J1(J1$_{,1}$, J1$_{,2}$,..., J1$_{,N}$)} of the first pattern. Each time a clock is provided, the first partial memory 111 outputs weight values one by one in order from the first column of the N weight values. Then, the first partial memory 111 outputs the weight value of the N-th column, then returns to the first column, and again outputs the weight value for each clock from the first column. The first partial memory 111 starts outputting the weight value from the first column every N clocks.

The second partial memory 112 stores N weight values {J2(J2$_{,1}$, J2$_{,2}$,..., J2$_{,N}$)} of the second pattern. Each time a clock is provided, the second partial memory 112 outputs weight values one by one in order from the first column of the N weight values. Then, the second partial memory 112 outputs the weight value of the N-th column, then returns to the first column, and again outputs the weight value for each clock from the first column. The second partial memory 112 starts outputting the weight value from the first column every N clocks.

The X memory 81 stores N first variables $(x_j(t_1))$ at the immediately preceding time (an example of N first intermediate variables at first time). The X memory 81 outputs N first variables $(x_j(t_1))$ in order from the first first variable $(x_1(t_1))$ to the N-th first variable $(x_N(t_1))$ for each clock. After outputting the N-th first variable $(x_j(t_1))$, the X memory 81 outputs the first first variable $(x_N(t_1))$ in the next clock. The X memory 81 outputs the first first variable $(x_N(t_1))$ in the clock in which the index (i) is updated.

The matrix arithmetic circuit 93 includes a pattern memory 52, a pattern selector 113 (first selector), a multiplication circuit 115, and a cumulative addition circuit 116.

The pattern memory 52 stores pattern information generated by the problem generation unit 42. The pattern memory 52 acquires an index(i) representing any of 1 to N generated from the control circuit 85. The index(i) is incremented every N clocks. The timing at which the index(i) is incremented is synchronized with the timing at which the weight value of the first column is output from the first partial memory 111 and the second partial memory 112. The pattern memory 52 outputs a selection value (0 or 1) indicating whether the row corresponding to the index(i) is the first pattern or the second pattern. In this example, in a case where the selection value is 0, the pattern indicates the first pattern, and in a case where the selection value is 1, the pattern indicates the second pattern.

The pattern selector 113 receives a selection value representing 0 or 1 from the pattern memory 52. The pattern selector 113 selects and outputs the weight value output from one of the first partial memory 111 and the second partial memory 112, the one being designated by the selection value.

The multiplication circuit 115 multiplies the weight value output from the pattern selector 113 by the first variable $(x_j(t_1))$ output from the X memory 81 to output a multiplication result.

The cumulative addition circuit 116 includes an adder 121, a reset selector 122, and a second latch circuit 123. The adder 121 adds the multiplication result output from the multiplication circuit 115 to the value stored in the second latch circuit 123. The reset selector 122 gives the value output from the adder 121 to the second latch circuit 123. Further, the reset selector 122 gives 0 to the second latch circuit 123 instead of the value output from the adder 121 every N clocks, namely, in synchronization with the update of the index (i). The second latch circuit 123 fetches and stores the value output from the reset selector 122 for each clock.

Such a cumulative addition circuit 116 calculates a cumulative addition value obtained by cumulatively adding the multiplication results output from the multiplication circuit 115 for each clock. The cumulative addition circuit 116 resets the cumulative addition value to 0 every N clocks, namely, in synchronization with the update of the index (i). In addition, the cumulative addition circuit 116 outputs the cumulative addition value as a product-sum operation result of the N weight values $(J_{i,1}$ to $J_{i,N})$ included in the row corresponding to the index (i) in the matrix (J) and the first variable $(x_j(t_1))$ in the cycle immediately before resetting the cumulative addition value to 0.

Such a matrix arithmetic circuit 93 can calculate a product-sum operation result $(Z'_i(t_1))$ (an example of the i-th second intermediate variable among the N second intermediate variables) represented by Expression (9).

$$\acute{z}_i(t_1) = \sum_{j=1}^{N} J_{i,j} x_j(t_1) \qquad \cdots (9)$$

As described above, the information processing device 20 according to the third embodiment stores the N weight values {J1(J1$_{,1}$, J1$_{,2}$,..., J1$_{,N}$)} of the first pattern and the N weight values {J2(J2$_{,1}$, J2$_{,2}$,..., J2$_{,N}$)} of the second pattern in the weight memory 50. As a result, the information processing device 20 is only required to generate 2×N weight values instead of generating all of the N×N weight values, so that the combination optimization problem can be generated in a time shorter than the generation time in a case of generating all of the plurality of weight values. Therefore, the information processing device 20 can generate the combination optimization problem at high speed and cause the solver device 40 to start solving at an early stage.

Moreover, since the solver device 40 is only required to store 2×N weight values without storing all of the N×N weight values, the size of the weight memory 50 can be reduced. As a result, the information processing device 20 according to the present embodiment can reduce the configuration of the solver device 40.

Note that, in the present embodiment, the N weight values included in the i-th row of the matrix (J) are either the first pattern or the second pattern. However, the N weight values included in the i row of the matrix (J) may be any of the K patterns. In this case, the weight memory 50 includes K partial memories 70-1 to 70-K. Then, the k-th partial memory 70-k, where k is an integer of one or more and K or less, among the K partial memories 70-1 to 70-K stores the N weight values of the k-th pattern of the K patterns. N weight values are read from each of the K partial memories 70-1 to 70-K as in the first partial memory 111 and the second partial memory 112. In addition, the pattern information indicates which of the K patterns each of the N rows included in the matrix (J) is.

In addition, in a case where the weight memory 50 includes K partial memories 70-1 to 70-K, the pattern selector 113 selects and outputs N weight values output from the partial memory 70 corresponding to the i-th row pattern indicated by the pattern information among the K partial memories 70-1 to 70-K. The cumulative addition circuit 116 cumulatively adds results obtained by multiplying each of the N weight values output from the pattern selector 113 by $x_j$. Then, the cumulative addition circuit 116 outputs a cumulative addition result obtained by cumulative addition as a product-sum operation result ($Z'_i(t_1)$) represented by Expression (9).

Fourth Embodiment

Next, a market system 10 according to the fourth embodiment will be described. The market system 10 according to the fourth embodiment is the same as that of the third embodiment except for the matrix arithmetic circuit 93. Hereinafter, the matrix arithmetic circuit 93 according to the fourth embodiment will be described, and detailed description of the same configuration as that of the third embodiment will be omitted.

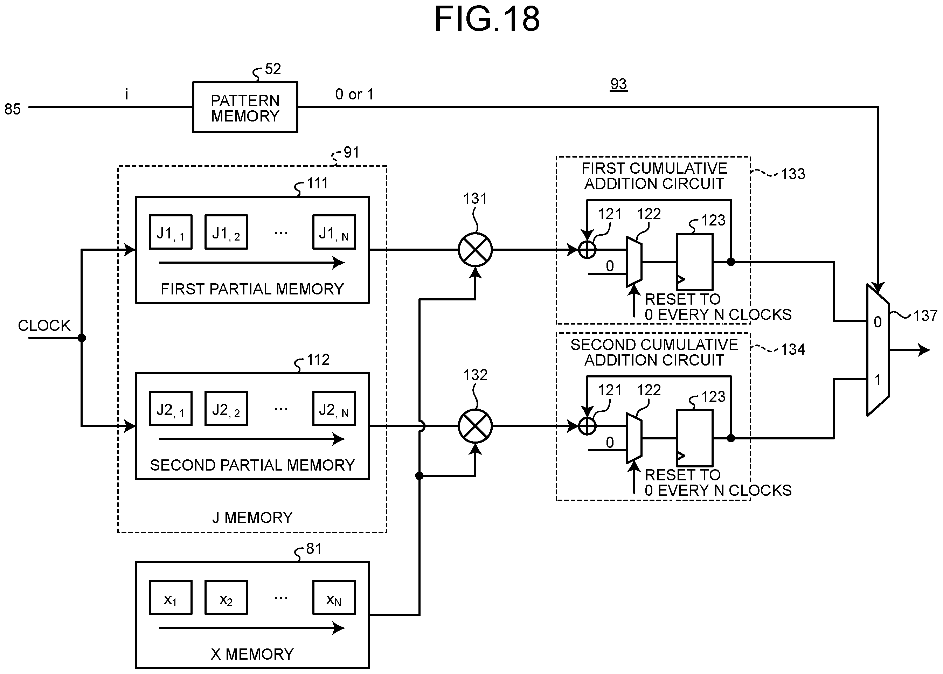

FIG. 18 is a diagram illustrating a configuration of the matrix arithmetic circuit 93 according to the fourth embodiment together with the J memory 91 and the X memory 81.

The matrix arithmetic circuit 93 includes a pattern memory 52, a first multiplication circuit 131, a second multiplication circuit 132, a first cumulative addition circuit 133, a second cumulative addition circuit 134, and an output selector 137.

The first multiplication circuit 131 multiplies the weight value output from the first partial memory 111 for each clock by the first variable ($x_i(t_1)$) output from the X memory 81 to output a first multiplication result.

The second multiplication circuit 132 multiplies the weight value output from the second partial memory 112 for each clock by the first variable (xi(ti)) output from the X memory 81 to output a second multiplication result.

The first cumulative addition circuit 133 has the same configuration as the cumulative addition circuit 116 according to the third embodiment. The first cumulative addition circuit 133 calculates, for each clock, the first cumulative addition value obtained by cumulatively adding the first multiplication results output from the first multiplication circuit 131. The first cumulative addition circuit 133 resets the first cumulative addition value to 0 every N clocks, namely, in synchronization with the update of the index (i). In addition, the first cumulative addition circuit 133 outputs the first cumulative addition value in the cycle immediately before resetting the first cumulative addition value to 0.

The second cumulative addition circuit 134 has the same configuration as the cumulative addition circuit 116 according to the third embodiment. The second cumulative addition circuit 134 calculates, for each clock, the second cumulative addition value obtained by cumulatively adding the second multiplication results output from the second multiplication circuit 132. The second cumulative addition circuit 134 resets the second cumulative addition value to 0 every N clocks, namely, in synchronization with the update of the index (i). In addition, the second cumulative addition circuit 134 outputs the second cumulative addition value in the cycle immediately before resetting the second cumulative addition value to 0.

The output selector 137 receives a selection value representing 0 or 1 from the pattern memory 52. The output selector 137 selects the cumulative addition value output from one of the first cumulative addition circuit 133 and the second cumulative addition circuit 134, the one being designated by the selection value. Then, the output selector 137 outputs the selected cumulative addition value as a product-sum operation result of the N weight values ($J_{i,1}$ to $J_{i,N}$) included in the row corresponding to the index (i) in the matrix (J) and the first variable ($x_j(t_1)$).

As described above, the information processing device 20 according to the fourth embodiment stores the N weight values {J1($J1_{,1}$, $J1_{,2}$,..., $J1_{,N}$)} of the first pattern and the N weight values {J2($J2_{,1}$, $J2_{,2}$,..., $J2_{,N}$)} of the second pattern in the weight memory 50. As a result, the information processing device 20 is only required to generate 2×N weight values instead of generating all of the N×N weight values, so that the combination optimization problem can be generated in a time shorter than the generation time in a case of generating all of the plurality of weight values. Therefore, the information processing device 20 can generate the combination optimization problem at high speed and cause the solver device 40 to start solving at an early stage.

Moreover, since the solver device 40 is only required to store 2×N weight values without storing all of the N×N weight values, the size of the weight memory 50 can be reduced. As a result, the information processing device 20 according to the present embodiment can reduce the configuration of the solver device 40.

Note that the N weight values included in the i row of the matrix (J) may be any of the K patterns. In this case, the weight memory 50 includes K partial memories 70-1 to 70-K. Then, the k-th partial memory 70-k among the K partial memories 70-1 to 70-K stores N weight values of the k-th pattern of the K patterns. N weight values are read from each of the K partial memories 70-1 to 70-K as in the first partial memory 111 and the second partial memory 112. In addition, the pattern information indicates which of the K patterns each of the N rows included in the matrix (J) is.

In addition, in the fourth embodiment, in a case where the weight memory 50 includes K partial memories 70-1 to 70-K, the matrix arithmetic circuit 93 includes K multiplication circuits and K cumulative addition circuits. A k-th multiplication circuit among the K multiplication circuits outputs a result obtained by multiplying each of the N weight values output from the k-th partial memory 70-k among the K partial memories 70-1 to 70-K by $x_j$. Each of the K cumulative addition circuits has the same configuration as the first cumulative addition circuit 133 and the second cumulative addition circuit 134. The k-th cumulative addition circuit among the K cumulative addition circuits adds the multiplication results output from the k-th multiplication circuit by N cycles. The k-th cumulative addition circuit outputs a cumulative addition result obtained by cumulatively adding results obtained by multiplying each of the N weight values output from the k-th partial memory 70-k by $x_j$. The output selector 137 outputs the cumulative addition result output from the cumulative addition circuit corresponding to the i-th row pattern indicated by the pattern information among the K cumulative addition circuits as a product-sum operation result ($Z'_i(t_1)$) represented by Expression (9).

Fifth Embodiment

Next, a control system 210 according to the fifth embodiment will be described.

In the first to fourth embodiments, an example in which the information processing device 20 is applied to the market system 10 is described. The information processing device 20 is not limited to the market system 10, and can be applied to other systems as long as the system executes a process using the combination optimization problem on data that changes with the lapse of time. For example, the information processing device 20 can also be applied to the control system 210 that controls a movement operation in a moving object.

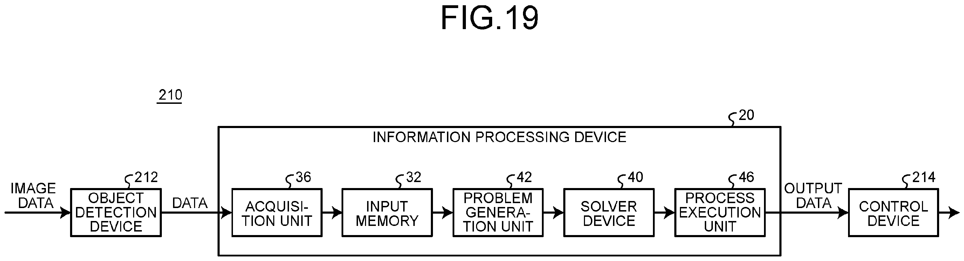

FIG. 19 is a diagram illustrating an example of a configuration of the control system 210 according to the fifth embodiment. The control system 210 controls, for example, a moving object that autonomously moves, such as an autonomous car, a drone, or a robot.

The control system 210 includes an object detection device 212, an information processing device 20, a control device 214.

The object detection device 212 acquires, for example, image data from a camera that images the surroundings of the moving object to be controlled. The object detection device 212 may acquire sensor data from another sensor device in addition to the image data. The object detection device 212 detects coordinate data representing three-dimensional coordinates for each of one or more objects around the moving object based on the acquired image data, sensor data, and the like. Moreover, the object detection device 212 may also detect three-dimensional coordinates of the moving object itself to be controlled.

The object detection device 212 irregularly and repeatedly outputs data including identification information for identifying any one of one or more objects and coordinate data (input information) representing coordinates of the object identified by the identification information to the information processing device 20. Note that the input information may include, in addition to the coordinate data, other related information such as the moving speed, the acceleration, the moving direction, and the type of the object identified by the identification information.

The control device 214 acquires, from the information processing device 20, output data including output information indicating that a predetermined operation is performed on the moving object in order to control the moving object. The control device 214 controls the moving object based on the acquired output data.

Moreover, the output information may indicate that a predetermined operation is performed on any of one or more objects around the moving object. For example, the output information may include information indicating that information indicating movement control, a predetermined instruction, warning, or the like is given to any of one or more objects around the moving object. In this case, the output data includes identification information for identifying any object of one or more objects, and output information. Moreover, in a case where such output data is received, the control device 214 executes a predetermined operation on the object identified by the identification information included in the output data.

The information processing device 20 has the same configuration as that described in the first to fourth embodiments.

The information processing device 20 generates a combination optimization problem based on data irregularly given from the object detection device 212, and causes the solver device 40 to solve the combination optimization problem. Then, the information processing device 20 acquires a solution of the combination optimization problem from the solver device 40, generates output data based on the solution in response to acquiring the solution, and outputs the generated output data to the control device 214 which is an example of the first device.

The information processing device 20 according to the present embodiment can generate the combination optimization problem at high speed and cause the solver device 40 to start solving the problem at an early stage. Moreover, the information processing device 20 according to the present embodiment can reduce the configuration of the solver device 40.

Hardware Configuration

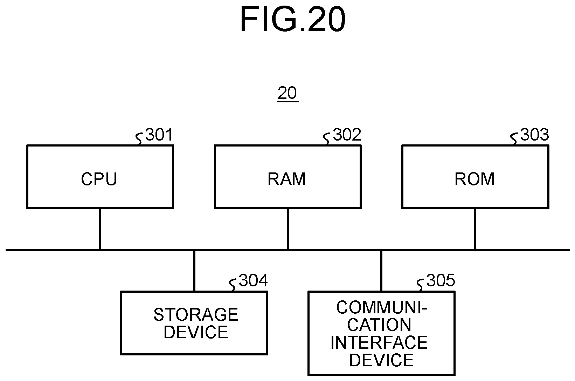

FIG. 20 is a diagram illustrating an example of a hardware configuration of the information processing device 20. The partial configuration not including the solver device 40 in the information processing device 20 is realized by a computer having a hardware configuration as illustrated in FIG. 20, for example. The information processing device 20 includes a central processing unit (CPU) 301, a random access memory (RAM) 302, a read only memory (ROM) 303, a storage device 304, and a communication interface device 305. These units are connected by a bus.

The CPU 301 (an example of an information processing circuit) is one or more processors that execute arithmetic process, control process, and the like according to a program. The CPU 301 uses a predetermined region of the RAM 302 for a work region, and executes various processes in cooperation with programs stored in the ROM 303, the storage device 304, and so forth.

The RAM 302 is a memory such as a synchronous dynamic random access memory (SDRAM). The RAM 302 functions as a work region of the CPU 301. The ROM 303 is a memory that stores programs and various types of information in a non-rewritable manner.

The storage device 304 is a device that writes and reads data to and from a semiconductor storage medium such as a flash memory, a magnetically or optically recordable storage medium, or the like. The storage device 304 writes and reads data to and from the storage medium under the control of the CPU 301. The communication interface device 305 communicates with an external device via a network in accordance with control from the CPU 301.

The program executed by the computer causes the computer to function as the information processing device 20. This program is developed on the RAM 302 and executed by the CPU 301 (processor).

In addition, the program executed by the computer is recorded in and provided by a computer-readable recording medium such as a CD-ROM, a flexible disk, a CD-R, or a digital versatile disk (DVD) as a file in a format that can be installed or executed in the computer.

Moreover, the program may be stored on a computer connected to a network such as the Internet and provided by being downloaded via the network. Moreover, the program may be provided or distributed via a network such as the Internet. In addition, the program executed by the information processing device 20 may be provided by being incorporated in the ROM 303 or the like in advance.

The program for causing the computer to function as the information processing device 20 has a module configuration including, for example, an acquisition module, a solver module, a problem generation module, and a process execution module. This program is executed by the CPU 301 to load each module into the RAM 302, and causes the CPU 301 to function as the acquisition unit 36, the solver device 40, the problem generation unit 42, and the process execution unit 46. In a case where the CPU 301 is a plurality of processors, these units may be divided into and carried by a plurality of processors. In addition, this program causes the RAM 302 and the storage device 304 to function as the input memory 32. Note that part of or all these configurations may be configured by hardware.

Moreover, the solver device 40 may be implemented by one or more reconfigurable semiconductor devices such as a field-programmable gate array (FPGA). Moreover, the solver device 40 may be implemented by an electronic circuit including one or more CPUs, a microprocessor, a graphics processing unit (GPU), an application specific integrated circuit (ASIC), or circuits thereof.

Note that the solver device 40 may be incorporated in the information processing device 20. For example, the solver device 40 may be incorporated as an accelerator in part of the information processing device 20. Moreover, the solver device 40 may include some functions of the information processing device 20, for example, the problem generation unit 42.

Moreover, in a case where the information processing device 20 is implemented by a reconfigurable semiconductor device such as an FPGA, circuit information (configuration data) written in the reconfigurable semiconductor device to operate the reconfigurable semiconductor device as the information processing device 20 may be stored on a computer connected to a network such as the Internet and provided by being downloaded via the network. In addition, circuit information (configuration data) written in the reconfigurable semiconductor device in order to operate the reconfigurable semiconductor device as the information processing device 20 may be recorded in a computer-readable recording medium and provided.

Moreover, in a case where the information processing device 20 is realized by a semiconductor device such as an ASIC, circuit information representing a configuration of a circuit described in a hardware description language used for designing and manufacturing the information processing device 20 may be stored on a computer connected to a network such as the Internet, and may be provided by being downloaded via a network. Moreover, circuit information representing a configuration of a circuit described in a hardware description language used for designing and manufacturing the information processing device 20 may be provided by being recorded in a computer-readable recording medium.

While certain embodiments have been described, these embodiments have been presented by way of example only, and are not intended to limit the scope of the inventions. Indeed, the novel embodiments described herein may be embodied in a variety of other forms, moreover, various omissions, substitutions, and changes in the form of the embodiments described herein may be made without departing from the spirit of the inventions. The accompanying claims and their equivalents are intended to cover such forms or modifications as would fall within the scope and spirit of the inventions.

Supplement

The above-described embodiments can be summarized in the following technical schemes.

(Technical scheme 1)

An information processing device executing processing on data, the information processing device comprising:

a solver device configured to solve a combination optimization problem; and
an information processing circuit connected to the solver device and configured to

acquire the data, and
generate the combination optimization problem based on the data and cause the solver device to solve the combination optimization problem, wherein

a cost function in the combination optimization problem includes a plurality of decision variables and a plurality of weight values,
a term included in the cost function is represented by multiplication of one or more decision variables of the plurality of decision variables and a weight value of the plurality of weight values,
a first partial weight group being part of the plurality of weight values is the same as a second partial weight group being other part of the plurality of weight values,
the solver device includes a first memory to store the plurality of weight values,
the information processing circuit is configured to,

in generating the combination optimization problem, generate the plurality of weight values based on the data and write the plurality of weight values to the first memory, and,
in writing the plurality of weight values, write the first partial weight group and the second partial weight group in a common region in the first memory and give, to the solver device, first information indicating a storage position of each of the weight values in the first memory, and

the solver device is configured to read the plurality of weight values from the first memory on the basis of the first information and obtain a solution.

(Technical scheme 2)

The information processing device according to the technical scheme 1, wherein the information processing circuit is further configured to acquire a solution of the combination optimization problem from the solver device, and execute a process based on the solution.

(Technical scheme 3)

The information processing device according to the technical scheme 1 or 2, wherein

a first weight value among the plurality of weight values is identified by an index representing a position in a predetermined first region,
the predetermined first region is divided into M partial regions having a same shape, where M is an integer of three or more,
a first partial region among the M partial regions includes a partial weight group being part of the plurality of weight values,
the partial weight group disposed in each of the M partial regions is represented by one of K patterns, where K is an integer of two or more and less than M,
the first memory stores the K patterns, and
the first information indicates that each of the M partial regions includes the partial weight group of which pattern among the K patterns.

(Technical scheme 4)

The information processing device according to the technical scheme 3, wherein

the solver device further includes a second memory to store the first information, and
the information processing circuit is configured to, in generating the combination optimization problem,
generate the partial weight groups of the K patterns on the basis of the data and write the generated partial weight groups in the first memory, and
generate the first information on the basis of the data and write the first information in the second memory.

(Technical scheme 5)

The information processing device according to the technical scheme 4, wherein the solver device is configured to, when reading the first weight value among the plurality of weight values,

identify, from the M partial regions, a partial region including the first weight value,
identify, from the K patterns, a pattern in the partial region including the first weight value on the basis of the first information,
identify a first address representing a position of the first weight value in the partial region including the first weight value, and
read, as the first weight value from the first memory, a weight value identified by the first address in the partial weight group of the identified pattern.

(Technical scheme 6)

The information processing device according to any one of the technical schemes 3 to 5, wherein

the cost function includes a matrix including N decision variables, where N is an integer of two or more, as the plurality of decision variables,
the cost function includes a matrix including weight values of N rows×N columns as the plurality of weight values, and
the cost function is represented by a quadratic function of the N decision variables.

(Technical scheme 7)

The information processing device according to the technical scheme 6, wherein each of the decision variables is a binary discrete variable.

(Technical scheme 8)

The information processing device according to the technical scheme 7, wherein the combination optimization problem is a quadratic unconstrained binary optimization (QUBO) problem.

(Technical scheme 9)

The information processing device according to the technical scheme 8, wherein the solver device is configured to solve the QUBO problem as an Ising problem that minimizes an Ising model.

(Technical scheme 10)

The information processing device according to the technical scheme 9, wherein the solver device is configured to solve the Ising problem by a simulated bifurcation algorithm.

(Technical scheme 11)

The information processing device according to the technical scheme 7, wherein

the cost function is a cubic or higher function of the plurality of decision variables, and
the combination optimization problem is a higher order binary optimization (HUBO) problem.

(Technical scheme 12)

The information processing device according to the technical scheme 10, wherein the solver device includes

a matrix arithmetic circuit configured to calculate N second intermediate variables at a first time by matrix-multiplying N first intermediate variables at the first time and the matrix,
a first circuit configured to calculate N first variables at a second time after the first time and N second variables at the second time on the basis of the N second intermediate variables at the first time,
a control circuit configured to cause the matrix arithmetic circuit and the first circuit to execute processing from a start time to an end time, and
an output circuit configured to generate and output the solution on the basis of the N first variables at the end time,
an i-th spin, where i is an integer of one or more and N or less, among N spins in the Ising model corresponds to an i-th point among N points,
an i-th first variable among the N first variables corresponds to the i-th spin,
an i-th second variable among the N second variables corresponds to the i-th spin,
the i-th first variable represents a position of a point corresponding to the i-th spin,
the i-th second variable represents a momentum of a point corresponding to the i-th spin,
an i-th first intermediate variable among the N first intermediate variables corresponds to the i-th first variable,
the i-th first intermediate variable is a value obtained by multiplying the i-th first variable or the i-th first variable by a preset coefficient, and
an i-th second intermediate variable among the N second intermediate variables corresponds to the i-th second variable.

(Technical scheme 13)

The information processing device according to the technical scheme 12, wherein

each of the weight values of N rows×N columns included in the matrix is represented by $J_{i,j}$,
the i represents a row number of the matrix,
the j represents a column number of the matrix and is an integer of one or more and N or less,
N weight values included in an i row of the matrix are one of the K patterns,
the first information indicates which pattern of the K patterns each of N rows included in the matrix is,
the first memory includes K partial memories, and
a k-th partial memory, where k is an integer of one or more and K or less, among the K partial memories stores a k-th pattern of the K patterns.

(Technical scheme 14)

The information processing device according to the technical scheme 13, wherein the matrix arithmetic circuit includes

a first selector configured to select the N weight values output from a partial memory corresponding to an i-th row pattern indicated by the first information among the K partial memories, and output the selected N weight values, and
a cumulative addition circuit configured to output, as an i-th second intermediate variable among the N second intermediate variables, a cumulative addition result obtained by cumulatively adding results obtained by multiplying each of the N weight values output from the first selector by a j-th first intermediate variable among the N first intermediate variables.

(Technical scheme 15)

The information processing device according to the technical scheme 13, wherein

the matrix arithmetic circuit includes

K cumulative addition circuits, and
an output selector,

a k-th cumulative addition circuit among the K cumulative addition circuits is configured to output a cumulative addition result obtained by cumulatively adding results obtained by multiplying each of the N weight values output from a k-th partial memory among the K partial memories by a j-th first intermediate variable among the N first intermediate variables, and

the output selector is configured to output, as an i-th second intermediate variable among the N second intermediate variables, a cumulative addition result output from a cumulative addition circuit corresponding to an i-th row pattern indicated by the first information among the K cumulative addition circuits.

(Technical scheme 16)

The information processing device according to any one of the technical schemes 1 to 15, wherein

the information processing circuit is configured to, in acquiring the data, acquire a market state packet as the data from a market server device serving to trade N targets, where N is an integer of two or more,
the market state packet includes a transaction price for at least one of the N targets,
the cost function includes N decision variables as the plurality of decision variables, and
an n-th decision variable, where n is an integer of one or more and N or less, among the N decision variables represents whether to trade an n-th target among the N targets.

(Technical scheme 17)

The information processing device according to any one of the technical schemes 1 to 15, wherein the data includes coordinate data representing coordinates of at least one object.

(Technical scheme 18)

An information processing method implemented by a computer executing processing on data, the computer including a solver device serving to solve a combination optimization problem, the method comprising:

acquiring the data; and
generating the combination optimization problem based on the data and causing the solver device to solve the combination optimization problem,

wherein

a cost function in the combination optimization problem includes a plurality of decision variables and a plurality of weight values,
a term included in the cost function is represented by multiplication of one or more decision variables of the plurality of decision variables and a weight value of the plurality of weight values,
a first partial weight group being part of the plurality of weight values is the same as a second partial weight group being other part of the plurality of weight values,
the solver device includes a first memory to store the plurality of weight values, and
the method further comprising:

in generating the combination optimization problem, generating the plurality of weight values based on the data and write the plurality of weight values to the first memory;
in writing the plurality of weight values, writing the first partial weight group and the second partial weight group in a common region in the first memory and giving, to the solver device, first information indicating a storage position of each of the weight values in the first memory; and
causing the solver device to read the plurality of weight values from the first memory on the basis of the first information and obtain a solution.

(Technical scheme 19)

A computer program comprising computer-readable instructions to be executed by a computer, the computer including a solver device serving to solve a combination optimization problem, the instructions causing the computer to:

acquire the data; and
generate the combination optimization problem based on the data and cause the solver device to solve the combination optimization problem, wherein

a cost function in the combination optimization problem includes a plurality of decision variables and a plurality of weight values,

a term included in the cost function is represented by multiplication of one or more decision variables of the plurality of decision variables and a weight value of the plurality of weight values,

a first partial weight group being part of the plurality of weight values is the same as a second partial weight group being other part of the plurality of weight values,

the solver device includes a first memory to store the plurality of weight values, and

the program further instructs the computer to:

in generating the combination optimization problem, generate the plurality of weight values based on the data and write the plurality of weight values to the first memory;

in writing the plurality of weight values, write the first partial weight group and the second partial weight group in a common region in the first memory and give, to the solver device, first information indicating a storage position of each of the weight values in the first memory; and

causes the solver device to read the plurality of weight values from the first memory on the basis of the first information and obtain a solution.

(Technical scheme 20)

Circuit information described in a hardware description language, the circuit information representing a configuration of a circuit, the circuit information causing the circuit to function as an information processing device executing processing on data, the information processing device including a solver device serving to solve a combination optimization problem, the processing comprising:

acquiring the data; and

generating the combination optimization problem based on the data and causing the solver device to solve the combination optimization problem,

wherein

a cost function in the combination optimization problem includes a plurality of decision variables and a plurality of weight values,

a term included in the cost function is represented by multiplication of one or more decision variables of the plurality of decision variables and a weight value of the plurality of weight values,

a first partial weight group being part of the plurality of weight values is the same as a second partial weight group being other part of the plurality of weight values,

the solver device includes a first memory to store the plurality of weight values, and

the processing further comprising:

in generating the combination optimization problem, generating the plurality of weight values based on the data and write the plurality of weight values to the first memory;

in writing the plurality of weight values, writing the first partial weight group and the second partial weight group in a common region in the first memory and giving, to the solver device, first information indicating a storage position of each of the weight values in the first memory; and

causing the solver device to read the plurality of weight values from the first memory on the basis of the first information and obtain a solution.

(Technical scheme 21)

Circuit information written in a reconfigurable semiconductor device for operating the reconfigurable semiconductor device, the circuit information causing the reconfigurable semiconductor device to function as an information processing device executing processing on data, the information processing device including a solver device serving to solve a combination optimization problem, the processing comprising:

acquiring the data; and

generating the combination optimization problem based on the data and causing the solver device to solve the combination optimization problem,

wherein

a cost function in the combination optimization problem includes a plurality of decision variables and a plurality of weight values,
a term included in the cost function is represented by multiplication of one or more decision variables of the plurality of decision variables and a weight value of the plurality of weight values,
a first partial weight group being part of the plurality of weight values is the same as a second partial weight group being other part of the plurality of weight values,
the solver device includes a first memory to store the plurality of weight values, and
the processing further comprising:

in generating the combination optimization problem, generating the plurality of weight values based on the data and write the plurality of weight values to the first memory;
in writing the plurality of weight values, writing the first partial weight group and the second partial weight group in a common region in the first memory and giving, to the solver device, first information indicating a storage position of each of the weight values in the first memory; and
causing the solver device to read the plurality of weight values from the first memory on the basis of the first information and obtain a solution.

**Claims**

1. An information processing device (20) executing processing on data, the information processing device comprising:

a solver device (40) configured to solve a combination optimization problem; and
an information processing circuit (301) connected to the solver device (40) and configured to

acquire the data, and
generate the combination optimization problem based on the data and cause the solver device to solve the combination optimization problem, wherein

a cost function in the combination optimization problem includes a plurality of decision variables and a plurality of weight values,
a term included in the cost function is represented by multiplication of one or more decision variables of the plurality of decision variables and a weight value of the plurality of weight values,
a first partial weight group being part of the plurality of weight values is the same as a second partial weight group being other part of the plurality of weight values,
the solver device (40) includes a first memory (50) to store the plurality of weight values,
the information processing circuit (301) is configured to,

in generating the combination optimization problem, generate the plurality of weight values based on the data and write the plurality of weight values to the first memory (50), and,
in writing the plurality of weight values, write the first partial weight group and the second partial weight group in a common region in the first memory (50) and give, to the solver device (40), first information indicating a storage position of each of the weight values in the first memory (50), and

the solver device (40) is configured to read the plurality of weight values from the first memory (50) on the basis of the first information and obtain a solution.

2. The information processing device according to claim 1, wherein the information processing circuit (30) is further configured to acquire a solution of the combination optimization problem from the solver device (40), and execute a process based on the solution.

3. The information processing device according to claim 1 or 2, wherein

a first weight value among the plurality of weight values is identified by an index representing a position in a predetermined first region,
the predetermined first region is divided into M partial regions having a same shape, where M is an integer of three or more,
a first partial region among the M partial regions includes a partial weight group being part of the plurality of weight values,
the partial weight group disposed in each of the M partial regions is represented by one of K patterns, where K is an integer of two or more and less than M,
the first memory (50) stores the K patterns, and
the first information indicates that each of the M partial regions includes the partial weight group of which pattern among the K patterns.

4. The information processing device according to claim 3, wherein

the solver device (40) further includes a second memory (52) to store the first information, and
the information processing circuit (301) is configured to, in generating the combination optimization problem,

generate the partial weight groups of the K patterns on the basis of the data and write the generated partial weight groups in the first memory (50), and
generate the first information on the basis of the data and write the first information in the second memory (52).

5. The information processing device according to claim 4, wherein the solver device (40) is configured to, when reading the first weight value among the plurality of weight values,

identify, from the M partial regions, a partial region including the first weight value,
identify, from the K patterns, a pattern in the partial region including the first weight value on the basis of the first information,
identify a first address representing a position of the first weight value in the partial region including the first weight value, and
read, as the first weight value from the first memory (50), a weight value identified by the first address in the partial weight group of the identified pattern.

6. The information processing device according to claim 3 to 5, wherein

the cost function includes a matrix including N decision variables, where N is an integer of two or more, as the plurality of decision variables,
the cost function includes a matrix including weight values of N rows×N columns as the plurality of weight values, and
the cost function is represented by a quadratic function of the N decision variables.

7. The information processing device according to claim 1 to 6, wherein the solver device (40) is configured to solve the Ising problem by a simulated bifurcation algorithm.

8. The information processing device according to claim 7, wherein

the solver device (40) includes

a matrix arithmetic circuit (93) configured to calculate N second intermediate variables at a first time by matrix-multiplying N first intermediate variables at the first time and the matrix,
a first circuit (84) configured to calculate N first variables at a second time after the first time and N second variables at the second time on the basis of the N second intermediate variables at the first time,
a control circuit (85) configured to cause the matrix arithmetic circuit and the first circuit to execute processing from a start time to an end time, and
an output circuit (73) configured to generate and output the solution on the basis of the N first variables at the end time,

an i-th spin, where i is an integer of one or more and N or less, among N spins in the Ising model corresponds to an i-th point among N points,
an i-th first variable among the N first variables corresponds to the i-th spin,
an i-th second variable among the N second variables corresponds to the i-th spin,

the i-th first variable represents a position of a point corresponding to the i-th spin,

the i-th second variable represents a momentum of a point corresponding to the i-th spin,

an i-th first intermediate variable among the N first intermediate variables corresponds to the i-th first variable,

the i-th first intermediate variable is a value obtained by multiplying the i-th first variable or the i-th first variable by a preset coefficient, and

an i-th second intermediate variable among the N second intermediate variables corresponds to the i-th second variable.

9.  The information processing device according to claim 8, wherein

each of the weight values of N rows×N columns included in the matrix is represented by $J_{i,j}$,

the i represents a row number of the matrix,

the j represents a column number of the matrix and is an integer of one or more and N or less,

N weight values included in an i row of the matrix are one of the K patterns,

the first information indicates which pattern of the K patterns each of N rows included in the matrix is,

the first memory (50) includes K partial memories (70-1,...,70-K), and

a k-th partial memory, where k is an integer of one or more and K or less, among the K partial memories stores a k-th pattern of the K patterns.

10. The information processing device according to claim 9, wherein the matrix arithmetic circuit (93) includes

a first selector (113) configured to select the N weight values output from a partial memory corresponding to an i-th row pattern indicated by the first information among the K partial memories, and output the selected N weight values, and

a cumulative addition circuit (116) configured to output, as an i-th second intermediate variable among the N second intermediate variables, a cumulative addition result obtained by cumulatively adding results obtained by multiplying each of the N weight values output from the first selector by a j-th first intermediate variable among the N first intermediate variables.

11. The information processing device according to claim 9, wherein

the matrix arithmetic circuit (93) includes

K cumulative addition circuits, and
an output selector (137),

a k-th cumulative addition circuit among the K cumulative addition circuits is configured to output a cumulative addition result obtained by cumulatively adding results obtained by multiplying each of the N weight values output from a k-th partial memory among the K partial memories by a j-th first intermediate variable among the N first intermediate variables, and

the output selector (137) is configured to output, as an i-th second intermediate variable among the N second intermediate variables, a cumulative addition result output from a cumulative addition circuit corresponding to an i-th row pattern indicated by the first information among the K cumulative addition circuits.

12. The information processing device according to any one of claims 1 to11, wherein

the information processing circuit (301) is configured to, in acquiring the data, acquire a market state packet as the data from a market server device serving to trade N targets, where N is an integer of two or more,

the market state packet includes a transaction price for at least one of the N targets, the cost function includes N decision variables as the plurality of decision variables, and

an n-th decision variable, where n is an integer of one or more and N or less, among the N decision variables represents whether to trade an n-th target among the N targets.

13. The information processing device according to any one of claims 1 to 11, wherein the data includes coordinate data representing coordinates of at least one object.

14. An information processing method implemented by a computer executing processing on data, the computer including a solver device serving to solve a combination optimization problem, the method comprising:

acquiring the data; and

generating the combination optimization problem based on the data and causing the solver device to solve the combination optimization problem,

wherein

a cost function in the combination optimization problem includes a plurality of decision variables and a plurality of weight values,

a term included in the cost function is represented by multiplication of one or more decision variables of the plurality of decision variables and a weight value of the plurality of weight values,

a first partial weight group being part of the plurality of weight values is the same as a second partial weight group being other part of the plurality of weight values,

the solver device includes a first memory to store the plurality of weight values, and

the method further comprising:

in generating the combination optimization problem, generating the plurality of weight values based on the data and write the plurality of weight values to the first memory;

in writing the plurality of weight values, writing the first partial weight group and the second partial weight group in a common region in the first memory and giving, to the solver device, first information indicating a storage position of each of the weight values in the first memory; and

causing the solver device to read the plurality of weight values from the first memory on the basis of the first information and obtain a solution.

15. A computer program comprising computer-readable instructions to be executed by a computer, the computer including a solver device serving to solve a combination optimization problem, the instructions causing the computer to:

acquire the data; and

generate the combination optimization problem based on the data and cause the solver device to solve the combination optimization problem, wherein

a cost function in the combination optimization problem includes a plurality of decision variables and a plurality of weight values,

a term included in the cost function is represented by multiplication of one or more decision variables of the plurality of decision variables and a weight value of the plurality of weight values,

a first partial weight group being part of the plurality of weight values is the same as a second partial weight group being other part of the plurality of weight values,

the solver device includes a first memory to store the plurality of weight values, and

the program further instructs the computer to:

in generating the combination optimization problem, generate the plurality of weight values based on the data and write the plurality of weight values to the first memory;

in writing the plurality of weight values, write the first partial weight group and the second partial weight group in a common region in the first memory and give, to the solver device, first information indicating a storage position of each of the weight values in the first memory; and

causes the solver device to read the plurality of weight values from the first memory on the basis of the first information and obtain a solution.

16. Circuit information described in a hardware description language, the circuit information representing a configuration of a circuit, the circuit information causing the circuit to function as an information processing device executing processing on data, the information processing device including a solver device serving to solve a combination optimization problem, the processing comprising:

acquiring the data; and

generating the combination optimization problem based on the data and causing the solver device to solve the combination optimization problem,

wherein

a cost function in the combination optimization problem includes a plurality of decision variables and a plurality of weight values,

a term included in the cost function is represented by multiplication of one or more decision variables of the plurality of decision variables and a weight value of the plurality of weight values,

a first partial weight group being part of the plurality of weight values is the same as a second partial weight group being other part of the plurality of weight values,

the solver device includes a first memory to store the plurality of weight values, and

the processing further comprising:

in generating the combination optimization problem, generating the plurality of weight values based on the data and write the plurality of weight values to the first memory;

in writing the plurality of weight values, writing the first partial weight group and the second partial weight group in a common region in the first memory and giving, to the solver device, first information indicating a storage position of each of the weight values in the first memory; and

causing the solver device to read the plurality of weight values from the first memory on the basis of the first information and obtain a solution.

17. Circuit information written in a reconfigurable semiconductor device for operating the reconfigurable semiconductor device, the circuit information causing the reconfigurable semiconductor device to function as an information processing device executing processing on data, the information processing device including a solver device serving to solve a combination optimization problem, the processing comprising:

acquiring the data; and

generating the combination optimization problem based on the data and causing the solver device to solve the combination optimization problem,

wherein

a cost function in the combination optimization problem includes a plurality of decision variables and a plurality of weight values,

a term included in the cost function is represented by multiplication of one or more decision variables of the plurality of decision variables and a weight value of the plurality of weight values,

a first partial weight group being part of the plurality of weight values is the same as a second partial weight group being other part of the plurality of weight values,

the solver device includes a first memory to store the plurality of weight values, and

the processing further comprising:

in generating the combination optimization problem, generating the plurality of weight values based on the data and write the plurality of weight values to the first memory;

in writing the plurality of weight values, writing the first partial weight group and the second partial weight group in a common region in the first memory and giving, to the solver device, first information indicating a storage position of each of the weight values in the first memory; and

causing the solver device to read the plurality of weight values from the first memory on the basis of the first information and obtain a solution.

# FIG.1

N-size problem

# FIG.2

| N DECISION VARIABLES | 2×N INTERNAL VARIABLES |
|---|---|

# FIG.3

```
        ┌─────────────┐
        │    START    │
        └─────────────┘
               │
               ▼
  ┌──────────────────────────┐
  │     ACQUIRE PROBLEM       │──S11
  └──────────────────────────┘
               │
               ▼
  ┌──────────────────────────┐
  │        INITIALIZE         │──S12
  └──────────────────────────┘
               │
               ▼
  ┌──────────────────────────┐
  │     REPEATED PROCESS      │──S13
  └──────────────────────────┘
               │
               ▼
  ┌──────────────────────────┐
  │  EXECUTE y UPDATE PROCESS │──S14
  └──────────────────────────┘
               │
               ▼
  ┌──────────────────────────┐
  │  EXECUTE x UPDATE PROCESS │──S15
  └──────────────────────────┘
               │
               ▼
  ┌──────────────────────────┐
  │   EXECUTE WALL PROCESS    │──S16
  └──────────────────────────┘
               │
               ▼
  ┌──────────────────────────┐
  │     REPEATED PROCESS      │──S17
  └──────────────────────────┘
               │
               ▼
  ┌──────────────────────────┐
  │         OUTPUT            │──S18
  └──────────────────────────┘
               │
               ▼
        ┌─────────────┐
        │     END     │
        └─────────────┘
```

# FIG.4

HOST DEVICE

J, h

$s^{opt}$

ISING MACHINE

$s_1$ ○
$s_2$ ○
$s_3$ ○
$s_4$ ○
$s_5$ ○
$s_6$ ○

# FIG.5

HOST DEVICE

$J, h, y^{init}$

$s^{opt} (x^{opt})$

SIMULATED BIFURCATION MACHINE

$x_1 \bigcirc \quad \bigcirc y_1$
$x_2 \bigcirc \quad \bigcirc y_2$
$x_3 \bigcirc \quad \bigcirc y_3$
$x_4 \bigcirc \quad \bigcirc y_4$
$x_5 \bigcirc \quad \bigcirc y_5$
$x_6 \bigcirc \quad \bigcirc y_6$

# FIG.6

10

MARKET SERVER DEVICE 12

18
DISTRIBUTION UNIT

17
MATCHING UNIT

16
RECEPTION UNIT

MARKET STATE PACKET

ORDER PACKET

ORDER PACKET

ORDER PACKET

14 (20)
CLIENT DEVICE (INFORMATION PROCESSING DEVICE)

14
CLIENT DEVICE

14
CLIENT DEVICE

# FIG.7

# FIG.8

ACQUISITION UNIT — MARKET STATE PACKET ... $t_1$ ...

PROBLEM GENERATION UNIT — PROBLEM GENERATION ... $t_2$ ...

SOLVER DEVICE — SOLVING ... $t_3$ ...

PROCESS EXECUTION UNIT — ORDER PACKET ... $t_4$ ...

MARKET STATE PACKET ... $t_5$ ... PROBLEM GENERATION ... $t_6$ ... SOLVING ... $t_7$ ... ORDER PACKET ... $t_8$

EP 4 495 837 A1

# FIG.9

⌐60

```
10   for i ← 1 to N do
11     for j ←1 to N do
12         Q_{i, j}  ← β ×p_sgn(i)×p_sgn(j)
13     end
14   end
```

# FIG.10

j →

i ↓

$$
\begin{array}{llllllll}
J_{1,1} & J_{1,2} & J_{1,3} & J_{1,4} & J_{1,5} & J_{1,6} & J_{1,7} & J_{1,8} \\
J_{2,1} & J_{2,2} & J_{2,3} & J_{2,4} & J_{2,5} & J_{2,6} & J_{2,7} & J_{2,8} \\
J_{3,1} & J_{3,2} & J_{3,3} & J_{3,4} & J_{3,5} & J_{3,6} & J_{3,7} & J_{3,8} \\
J_{4,1} & J_{4,2} & J_{4,3} & J_{4,4} & J_{4,5} & J_{4,6} & J_{4,7} & J_{4,8} \\
J_{5,1} & J_{5,2} & J_{5,3} & J_{5,4} & J_{5,5} & J_{5,6} & J_{5,7} & J_{5,8} \\
J_{6,1} & J_{6,2} & J_{6,3} & J_{6,4} & J_{6,5} & J_{6,6} & J_{6,7} & J_{6,8} \\
J_{7,1} & J_{7,2} & J_{7,3} & J_{7,4} & J_{7,5} & J_{7,6} & J_{7,7} & J_{7,8} \\
J_{8,1} & J_{8,2} & J_{8,3} & J_{8,4} & J_{8,5} & J_{8,6} & J_{8,7} & J_{8,8}
\end{array}
$$

# FIG.11

| | | | |
|---|---|---|---|
| B_N=1<br>$P_1$ | B_N=2<br>$P_1$ | B_N=3<br>$P_K$ | B_N=4<br>$P_3$ |
| B_N=5<br>$P_1$ | B_N=6<br>$P_K$ | B_N=7<br>$P_3$ | B_N=8<br>$P_2$ |
| B_N=9<br>$P_1$ | B_N=10<br>$P_1$ | B_N=11<br>$P_2$ | B_N=12<br>$P_K$ |
| B_N=13<br>$P_1$ | B_N=14<br>$P_3$ | B_N=15<br>$P_3$ | B_N=16<br>$P_4$ |

$P_1$ — FIRST PATTERN

$P_K$ — K-TH PATTERN

PATTERN INFORMATION

| $P_1$, $P_1$, $P_K$, $P_3$, $\cdots$ $P_4$ |
|---|

B_N  1  2  3  4  $\cdots$  K

$B\_N = f(i, j)$: REGION CONVERSION INFORMATION

$i'$, $j' = g(i, j)$: PARTIAL ADDRESS CONVERSION INFORMATION

# FIG.12

EP 4 495 837 A1

# FIG.13

40

74

SETTING
CIRCUIT

72

INPUT CIRCUIT

71

ARITHMETIC
CIRCUIT

73

OUTPUT
CIRCUIT

# FIG.14

85

CONTROL CIRCUIT

71

i, t

i, t

83

ACTION
ARITHMETIC
CIRCUIT

84

TIME
EVOLUTION
CIRCUIT

$z_i(t_1)$

$x_i(t_2)$

81

X MEMORY

82

Y MEMORY

$y_i(t_2)$

$x_j(t_1)$

$y_i(t_1)$

# FIG.15

_83_

WEIGHT MEMORY $\curvearrowleft$50

J MEMORY $\curvearrowleft$91

H MEMORY $\curvearrowleft$92

$\alpha$ FUNCTION CIRCUIT $\curvearrowleft$94    $t_1$

$J_{i,j}$

$x_j(t_1)$    81

MATRIX ARITHMETIC CIRCUIT $\curvearrowleft$93

$z_i(t_1)$

95

# FIG.16

j →

| |
|---|
| J1 (J1$_{,1}$, J1$_{,2}$,···, J1$_{,N}$) |
| J2 (J2$_{,1}$, J2$_{,2}$,···, J2$_{,N}$) |
| J2 |
| J2 |
| J1 |
| ⋮ |
| J1 |

i ↓

# FIG.17

EP 4 495 837 A1

# FIG.18

EP 4 495 837 A1

EP 4 495 837 A1

# FIG.19

210

INFORMATION PROCESSING DEVICE — 20

IMAGE DATA → OBJECT DETECTION DEVICE (212) → DATA → ACQUISITION UNIT (36) → INPUT MEMORY (32) → PROBLEM GENERATION UNIT (42) → SOLVER DEVICE (40) → PROCESS EXECUTION UNIT (46) → OUTPUT DATA → CONTROL DEVICE (214) →

# FIG.20

**EUROPEAN SEARCH REPORT**

Application Number

EP 24 16 0262

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KOSUKE TATSUMURA ET AL: "Real-time Trading System based on Selections of Potentially Profitable, Uncorrelated, and Balanced Stocks by NP-hard Combinatorial Optimization", ARXIV.ORG, CORNELL UNIVERSITY LIBRARY, 201 OLIN LIBRARY CORNELL UNIVERSITY ITHACA, NY 14853, 12 July 2023 (2023-07-12), XP091561699, | 1,2,7-17 | INV. G06N5/01 G06N7/01 G06F7/544 |
| Y | * abstract; figures 1, 2 * * page 2, column 1, line 5 - page 6, column 1, line 16 * | 3-6 | |
| Y | TATSUMURA KOSUKE ET AL: "FPGA-Based Simulated Bifurcation Machine", 2019 29TH INTERNATIONAL CONFERENCE ON FIELD PROGRAMMABLE LOGIC AND APPLICATIONS (FPL), IEEE, 8 September 2019 (2019-09-08), pages 59-66, XP033649156, DOI: 10.1109/FPL.2019.00019 [retrieved on 2019-11-05] * abstract; figures 1-4 * * page 62, column 1, line 3 - page 63, column 2, line 22 * | 3-6 | TECHNICAL FIELDS SEARCHED (IPC) G06N G06F |

-/--

The present search report has been drawn up for all claims

| Place of search | Date of completion of the search | Examiner |
|---|---|---|
| The Hague | 11 September 2024 | Rousset, Antoine |

EPO FORM 1503 03.82 (P04C01)

## EUROPEAN SEARCH REPORT

**Application Number**

EP 24 16 0262

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TATSUMURA KOSUKE KOSUKE TATSUMURA@TOSHIBA CO JP: "Large-scale combinatorial optimization in real-time systems by FPGA-based accelerators for simulated bifurcation", PROCEEDINGS OF THE 11TH INTERNATIONAL SYMPOSIUM ON HIGHLY EFFICIENT ACCELERATORS AND RECONFIGURABLE TECHNOLOGIES, ACMPUB27, NEW YORK, NY, USA, 21 June 2021 (2021-06-21), pages 1-6, XP058592546, DOI: 10.1145/3468044.3468045 ISBN: 978-1-4503-8549-7 * abstract; figure 8 * * page 4, column 1, line 9 - line 10 * | 13 | |
| A | TATSUMURA KOSUKE ET AL: "Scaling out Ising machines using a multi-chip architecture for simulated bifurcation", NATURE ELECTRONICS, vol. 4, no. 3, 1 March 2021 (2021-03-01), pages 208-217, XP093057100, DOI: 10.1038/s41928-021-00546-4 * abstract; figures 1-3 * * page 209, column 1, line 9 - page 212, column 1, line 14 * | 1-17 | **TECHNICAL FIELDS SEARCHED** (IPC) |

The present search report has been drawn up for all claims

| Place of search | Date of completion of the search | Examiner |
|---|---|---|
| The Hague | 11 September 2024 | Rousset, Antoine |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021060864 A
- JP 2019145010 A
- JP 2019159566 A

- JP 2021043667 A
- JP 2021043589 A

**Non-patent literature cited in the description**

- **HAYATO GOTO** ; **KOSUKE TATSUMURA** ; **ALEXANDER R. DIXON**. Combinatorial optimization by simulating adiabatic bifurcations in nonlinear Hamiltonian systems. *Science Advances*, 2019, vol. 5, eaav2372

- **HAYATO GOTO** ; **KOTARO ENDO** ; **MASARU SUZUKI** ; **YOSHISATO SAKAI** ; **TARO KANAO** ; **YOHEI HAMAKAWA** ; **RYO HIDAKA** ; **MASAYA YAMASAKI** ; **KOSUKE TATSUMURA**. High-performance combinatorial optimization based on classical mechanics. *Science Advances*, 2021, vol. 7, eabe7953